# EUROPEAN PATENT SPECIFICATION

(11) **EP 1 634 166 B1**
(45) Date of publication and mention of the grant of the patent: **06.01.2010**
(21) Application number: 04736057.3
(22) Date of filing: 04.06.2004
(51) Int. Cl.: G06F 9/44, G06F 9/45

(54) **SYSTEM AND METHOD FOR INCREMENTAL OBJECT GENERATION**
SYSTEM UND METHODE FÜR DIE INKREMENTELLE OBJEKTGENERIERUNG
SYSTEME ET PROCEDE DE PRODUCTION INCREMENTIELLE D'OBJETS

(30) Priority: 04.06.2003 US 453533
(43) Date of publication of application: 15.03.2006
(73) Proprietor: SAP AG, 69190 Walldorf (DE)
(72) Inventor: Lauterbach, Johannes, 69121 Heidelberg (DE); Lienhardt, Joerg, 69190 Walldorf (DE); Athur, Raghuvir Yuvaraj, Indira Nagar, Bagalore 560008 (IN); Giese, Peter, 67663 Kaiserslautern (DE)
(74) Representative: Collins, John David
(86) International application number: PCT/EP2004/006588
(87) International publication number: WO 2004/109509

(56) References cited:
- CHAMBERS C, DEAN J, GROVE D: "A FRAMEWORK FOR SELECTIVE RECOMPILATION IN THE PRESENCE OF COMPLEX INTERMODULE DEPENDENCIES" PROCEEDINGS OF THE 17TH. ANNUAL CONFERENCE ON SOFTWARE ENGINEERING. SEATTLE, APR. 23 - 30, 1995, PROCEEDINGS OF THE ANNUAL CONFERENCE ON SOFTWARE ENGINEERING, NEW YORK, ACM, US, vol. CONF. 17, 23 April 1995 (1995-04-23), pages 221-230, XP000545661 ISSN: 0270-5257
- FEILER P H, TICHY W F: "Propagator: a family of patterns" TECHNOLOGY OF OBJECT-ORIENTED LANGUAGES AND SYSTEMS, 1997. TOOLS 23. PROCEEDINGS SANTA BARBARA, CA, USA 28 JULY-1 AUG. 1997, LOS ALAMITOS, CA, USA,IEEE COMPUT. SOC, US, 28 July 1997 (1997-07-28), pages 355-366, XP010267565 ISBN: 0-8186-8383-X
- DART S: "Concepts in configuration management systems" PROCEEDINGS OF THE 3RD INTERNATIONAL WORKSHOP ON SOFTWARE CONFIGURATION MANAGEMENT ACM NEW YORK, NY, USA, 1991, pages 1-18, XP002298963 ISBN: 0-89791-429-5
- FELDMAN S I: "Make - A Program for Maintaining Computer Programs" INTERNET CITATION, April 1986 (1986-04), XP002198233
- JIM GRAY: "Locking" RECORD OF THE PROJECT MAC CONFERENCE ON CONCURRENT SYSTEMS AND PARALLEL COMPUTATION, JUNE 2-5, 170, WOODS HOLE, MASSACHUSETTS, 1970, pages 169-176, XP002515152 ACM, NEW YORK, NY, USA
- BLASGEN M ET AL: "The convoy phenomenon" OPERATING SYSTEMS REVIEW, ACM, NEW YORK, NY, US, vol. 13, no. 2, 1 April 1979 (1979-04-01), pages 20-25, XP002393751 ISSN: 0163-5980

## Description

### CROSS-REFERENCE TO RELATED APPLICATIONS

This application is related to the subject matter of the following U. S. patent applications filed on 04 June 2003: Publication No. US 2004/0249,823 entitled "System and Method for Object Navigation Grammar Completion, " Publication No. US2004/0250,258 entitled "System and Method for Rule Based Object Navigation," Publication No. US2004/0249,940 entitled "System and Method for Asynchronous Resource Management," and Publication No. US2004/250,257 entitled "System and Method for Generator State Object Validation."

### BACKGROUND OF THE INVENTION

In an object-oriented application development environment, application developers may model application behavior through the use of development objects, which may then be generated into corresponding runtime objects to be executed within an application framework. When a developer makes changes to particular development objects, the developer usually requests a generation of the corresponding runtime objects in order to verify that the behavior modeled in the particular development objects is correctly reflected in the corresponding runtime objects.

However, upon receiving a generation request, current application development environments generate all development objects into their corresponding runtime objects from scratch, even if the state of the runtime objects has not changed since the previous generation. This problem is exacerbated in large development environments with a large number of developers and development objects, where a generation could last for hours.

Accordingly, there is a need in the art for a system and method that selectively generates runtime objects influenced by changed development objects.

Chambers, C, Dean, J, Grove, D: "Framework for selective recompilation in the presence of complex intermodule dependencies", Proceedings of the 17th Annual Conference on Software Engineering, describes a framework for maintaining intermodule dependencies embodying different tradeoffs in terms of space usage, speed of processing, and selectivity of invalidation, that eases the implementation of incremental updated derived information. Various schemes for selective recompilation such as smart recompilation, filter sets for interprocedural summary information, and dependencies for whole program optimisation of object orientated languages are said to map onto the framework.

Feiler, P: "Propagator: a family of patterns", describes a family of patterns for consistently updating objects in a dependency network. Essentially, various methods for propagating changes through a dependency network are described.

Dart, S: "Concepts in Configuration Management Systems", Proceedings of the Third International Workshop on Software Configuration Management, describes concepts provided by configuration management systems.

Feldman, S I: "Make - A Program For Maintaining Computer Programs" describes how the "make" program provides a simple mechanism for maintaining up to date versions of programs that result from many operations on a number of files.

### SUMMARY OF THE INVENTION

Embodiments of the present invention provide for selectively generating runtime objects in an application development environment.

According to the present invention, there is provided, a computer system for selectively generating runtime objects in an application development environment, comprising: a metamodeller configured to receive specification of development object types defined by an application framework; a modeller configured to receive from an application developer specification of development objects, each development object being of a respective development object type; an invalidation manager component configured to receive an indication that one of said development objects of an associated development object type has been changed, determine which runtime objects from a set of runtime objects are influenced by the changed development object, each runtime object having a respective runtime object type, and invalidate the influenced runtime objects, wherein the determination of runtime objects is based upon invalidation rules specifying runtime object types influenced by changes in development objects of particular development object types; and a generator component configured to receive a request for a runtime object from the set of runtime objects and regenerate the requested runtime object from its corresponding development objects if the requested runtime object has been invalidated.

The invention further provides, a computer-implemented method for selectively generating runtime objects in an application development environment, comprising: receiving, by a metamodeller, specification of development object types defined by an application framework; receiving, by a modeller from an application developer, specification of development objects, each development object being of a respective development object type; receiving an indication that one of said development objects of an associated development object type has been changed; determining which runtime objects from a set of runtime objects are influenced by the changed development object, each of the runtime objects having a respective runtime object type, and the determining being based upon invalidation rules specifying runtime object types influenced by changes in development objects of particular development object types; invalidating the influenced runtime objects; receiving a request for a runtime object from the set of runtime objects; and regenerating the requested runtime object from its corresponding development objects if the requested runtime object has been invalidated.

### BRIEF DESCRIPTION OF THE DRAWINGS

FIG.1 is a flow chart that depicts a process for implementing incremental object generation in accordance with an embodiment of the present invention.
FIG.2 is a block diagram that depicts a user computing device in accordance with an embodiment of the present invention.
FIG.3 is a block diagram that depicts a network architecture for a development environment in accordance with an embodiment of the present invention.
FIG.4 is a block diagram that depicts modeling and generating an application development environment and corresponding applications that are compatible with an existing framework in accordance with an embodiment of the present invention.
FIG.5 is a block diagram that depicts the metalevels of repository based application development using the OMG Meta Object Facility (MOF) architecture in accordance with an embodiment of the present invention.
FIG. 6 is a screen shot of an object browser for modeling business objects in accordance with an embodiment of the present invention.
FIG. 7 is a screen shot of an object browser for modeling user interface elements in accordance with an embodiment of the present invention.
FIG. 8 is a block diagram that depicts changelist management in accordance with an embodiment of the present invention.
FIG. 9 is a block diagram that depicts changelist management in accordance with an embodiment of the present invention.
FIG. 10 is a screen shot of a changelist browser in accordance with an embodiment of the present invention.
FIG. 11 is a screen shot of a particular changelist in accordance with an embodiment of the present invention.
FIG. 12 is an abstract object repository model in accordance with an embodiment of the present invention.
FIG. 13 is an general framework object model in accordance with an embodiment of the present invention.
FIG. 14 is a detailed framework object model in accordance with an embodiment of the present invention.
FIG. 15 is a block diagram that depicts the generation of invalidation rules into application repository in accordance with an embodiment of the present invention.
FIG. 16 is a flow chart that depicts a process for generating invalidation rule objects in accordance with an embodiment of the present invention.
FIG. 17 is a block diagram of a repository based application development environment in accordance with an embodiment of the present invention.
FIG. 18 is a block diagram of a data structure representing a runtime object in accordance with an embodiment of the present invention.
FIG. 19 is a sequence diagram that depicts the flow of a repository based application development environment during invalidation of a development object in accordance with an embodiment of the present invention.
FIG. 20 is a sequence diagram that depicts the flow of a repository based application development environment during generation of a development object in accordance with an embodiment of the present invention.
FIG. 21 is a screen shot of a generator settings window in accordance with an embodiment of the present invention.
FIG. 22 is a block diagram of a data structure representing a runtime object in accordance with an embodiment of the present invention.
FIG. 23 is a diagram that depicts interfering validation/invalidation processes in accordance with an embodiment of the present invention.
FIG. 24 is a sequence diagram that depicts the flow of a repository based application development environment during invalidation of a development object in accordance with an embodiment of the present invention.

### DETAILED DESCRIPTION

### OVERVIEW

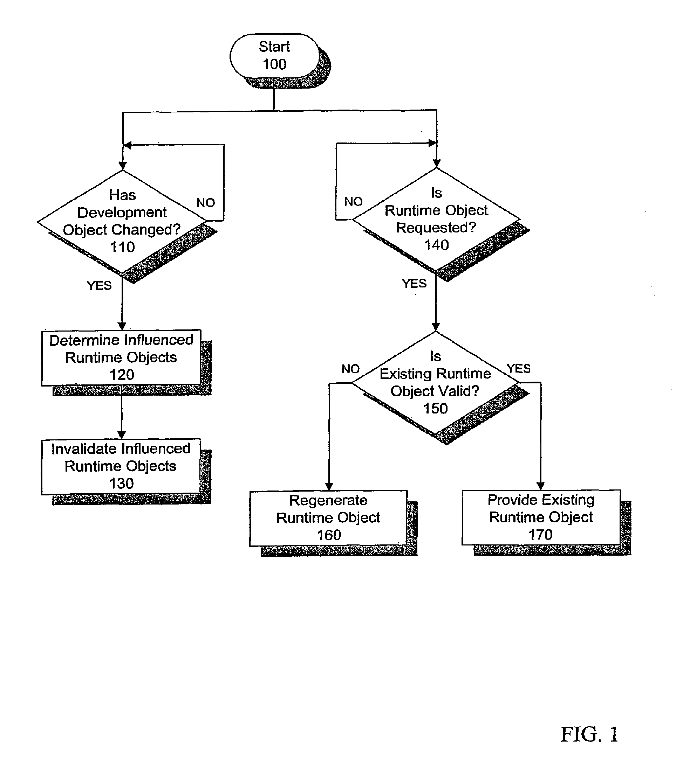

FIG. 1 depicts a process for implementing incremental object generation in accordance with an embodiment of the present invention. During application development runtime (step 100), when an application developer changes a development object (step 110), the runtime objects influenced by the changed development object are determined (step 120) and invalidated (step 130). Thus, when a developer requests a runtime object (step 140), it may be provided to the developer (step 170) if it is valid (step 150); otherwise, the runtime object is regenerated before being provided to the developer.

Embodiments described below illustrate an application development environment within which the present invention may be implemented.

### DEVELOPMENT ENVIRONMENT

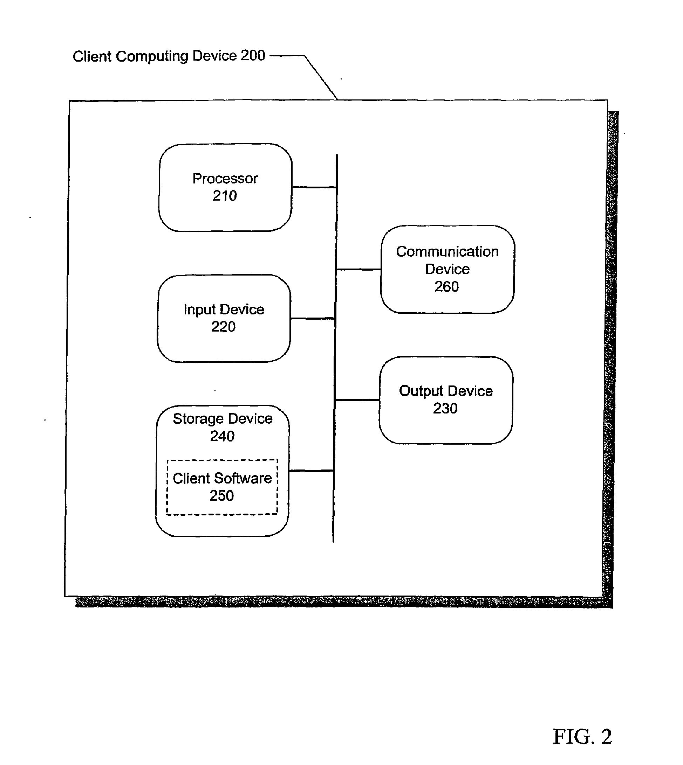

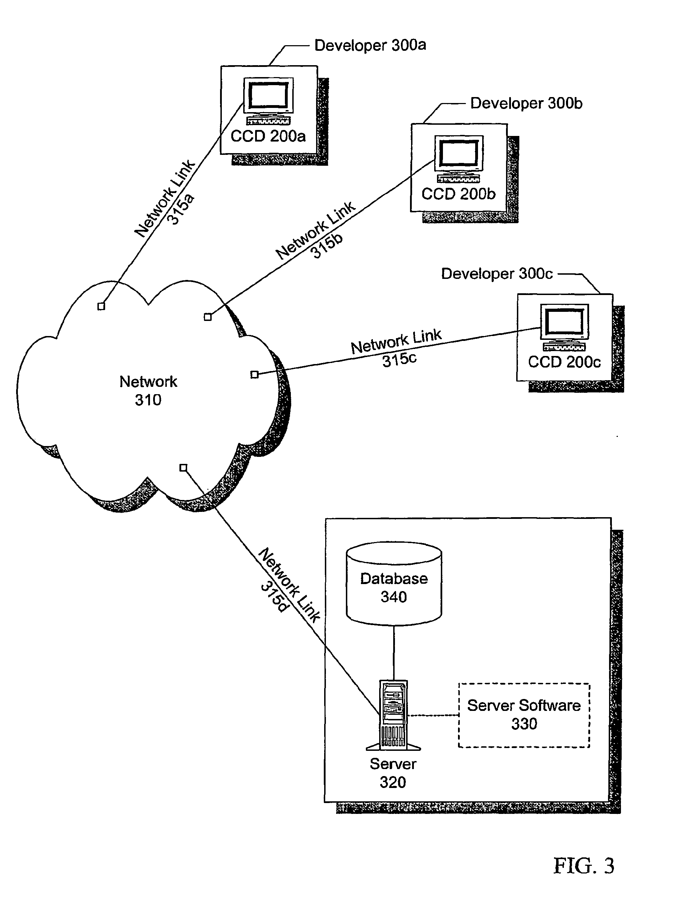

FIGS. 2 and 3 illustrate the components of a basic development environment in accordance with an embodiment of the present invention. FIG. 2 depicts client computing device 200, which may be a workstation, personal computer, handheld personal digital assistant ("PDA"), or any other type of microprocessor-based device. Client computing device 200 may include a processor 210, input device 220, output device 230, storage device 240, client software 250, and communication device 260.

Input device 220 may include a keyboard, mouse, pen-operated touch screen, voice-recognition device, or any other device that provides input from a user. Output device 230 may include a monitor, printer, disk drive, speakers, or any other device that provides output to user.

Storage device 240 may include volatile and nonvolatile data storage, including one or more electrical, magnetic or optical memories such as a RAM, cache, hard drive, CD-ROM drive, tape drive or removable storage disk. Communication device 260 may include a modem, network interface card, or any other device capable of transmitting and receiving signals over a network. The components of client computing device 200 may be connected via an electrical bus or wirelessly.

Client software 250 may be stored in storage device 240 and executed by processor 210, and may include, for example, the client side of a client/server application such as the SAP Mobile Application Studio component of a mySAP Customer Relationship Management (CRM) installation package that embodies the functionality of the present invention.

FIG. 3 illustrates a network architecture for a development environment in accordance with an embodiment of the present invention. According to one particular embodiment, when developer 300a invokes an SAP Mobile Application Studio application, client software 250 of client computing device 200a communicates with server software 330 (e.g., the server side of the SAP Mobile Application Studio application) of server 320 via network link 315a, network 310, and network link 315d.

Network link 315 may include telephone lines, DSL, cable networks, T1 or T3 lines, wireless network connections, or any other arrangement that implements the transmission and reception of network signals. Network 310 may include any type of interconnected communication system, and may implement any communications protocol, which may secured by any security protocol.

Server 320 includes a processor and memory for executing program instructions, as well as a network interface, and may include a collection of servers. In one particular embodiment, server 320 may include a combination of enterprise servers such as an application server and a database server. Database 340 may represent a relational or object database, and may be accessed via a database server.

Client computing device 200 and server 320 may implement any operating system, such as Windows or UNIX. Client software 250 and server software 330 may be written in any programming language, such as ABAP, C, C++, Java or Visual Basic.

### REPOSITORY BASED APPLICATION DEVELOPMENT

An embodiment of the present invention may be implemented through the use of a repository based application development environment. In this type of environment, application metadata is modeled (e.g., developed and tested) using an application repository, and then generated into a runtime application to be executed within its corresponding application framework.

### Overview

An application framework provides core services and functionality common to any application that may run on the framework. An application may take the form of runtime files that extend the basic functionality of the framework in order to achieve individual application behavior. In order to recognize and execute the application, the framework defines a particular format to which the application is expected to conform. By distinguishing an application from its framework in this manner, application development can focus on high-level functionality rather than the low-level, and generally static, services and functionality provided by the framework.

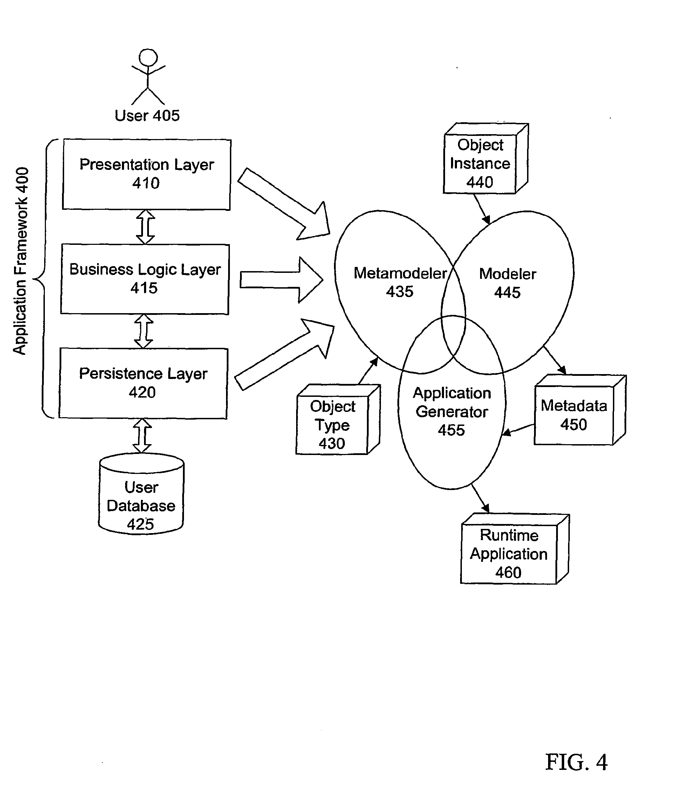

In order for an application development environment to properly model and generate applications to run on an existing framework, the application development environment needs to have intimate knowledge of the framework architecture. The process of modeling and generating both an application development environment and the corresponding applications in conformance with an existing framework is illustrated in FIG. 4.

Application framework 400 may represent an existing obj ect-oriented framework with a three-tier architecture: presentation layer 410, business logic layer 415 and persistence layer 420. Presentation layer 410 may provide a user interface to user 405, rendering data to and accepting data from user 405. Business logic layer 415 may act as a data provider to presentation layer 410, providing validation of user inputs and business rules, and other standard operations, such as save, delete, revert, etc. Persistence layer 420 may provide an abstraction over user database 425, providing an object-oriented wrapper over relational data stored in user database 425.

Modeler 445 and application generator 455 are part of a repository based application development environment that enables application developers to model and generate applications such as runtime application 460 to run on application framework 400. Since in this embodiment application framework 400 represents an object-oriented framework, application framework 400 defines a particular object format to which it expects runtime application 460 to conform. This object format is developed into modeler 445 and application generator 455 so that they may correctly model and generate runtime application 460. Metamodeler 435 provides a modeling (or, more specifically, metamodeling) environment that enables framework developers to specify the object format of application framework 400 to be developed into modeler 445.

Thus, framework developers use metamodeler 435 to specify the type of objects (i.e., object type 430) defined by application framework 400. This object type information is used to generate and develop modeler 445, which is used by application developers to specify instances of these object types (i.e., object instance 440) in the development and testing of an application's metadata (i.e., metadata 450). Once the development and testing of metadata 450 is complete, application generator 455 generates metadata 450 into runtime application 460 for execution within application framework 400.

### Transformation Between Application Metalevels

This repository based development environment can be described using the OMG Meta Object Facility (MOF) architecture. The MOF is a 4 layer meta data architecture described as follows:
- The user object layer (M0) is comprised of the information that one wishes to describe. This information is typically referred to as data.
- The model layer (M1) is comprised of the metadata that describes information. Metadata is informally aggregated as models.
- The metamodel layer (M2) is comprised of the descriptions (i.e. meta-metadata) that define the structure and semantics of meta-data. Meta-metadata is informally aggregated as metamodels. A metamodel can also be thought of as a modeling language (e.g., UML is defined by a metamodel) for describing different kinds of data.
- The meta-metamodel layer (M3) is comprised of the description of the structure and semantics of meta-metadata. In other words, it is the language for defining different kinds of metadata. The OMG MOF specification contains a standardized meta-metamodel which is designed to support the definition of different kinds of modeling languages like UML, IDL etc.

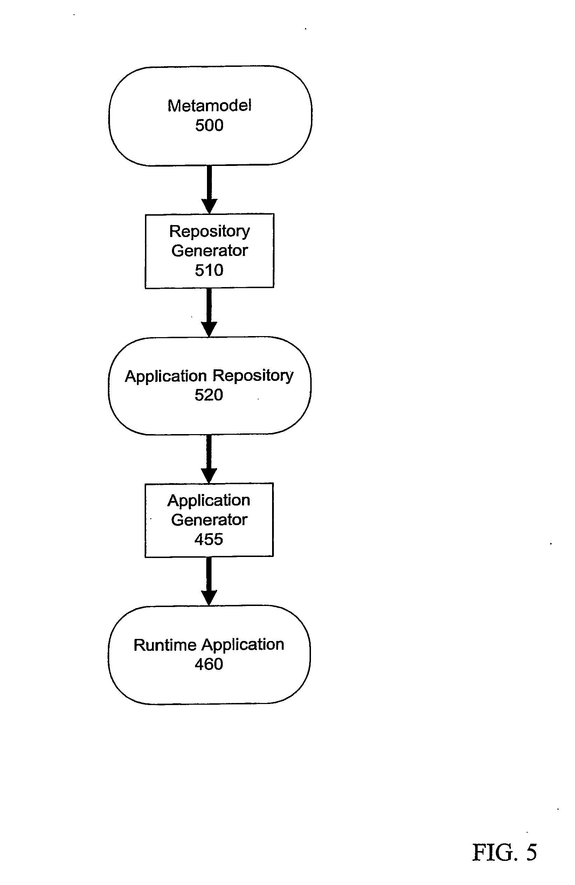

FIG. 5, for example, metamodel 500 (the M2 layer) represents the object types supported by application framework 400 that are specified by framework developers using metamodeler 435. Repository generator 510 uses metamodel 500 to generate framework-specific parts of application repository 520 (the M1 layer), which represent an object repository (i.e., database structure) and corresponding object navigational interface that are accessed by application developers via modeler 445 in the development and testing of metadata 450. Application generator 455 generates metadata 450 into runtime application 460 (the M0 layer) for execution within application framework 400. The M3 layer is not applicable to the current description of the repository based development environment.

### Modeler

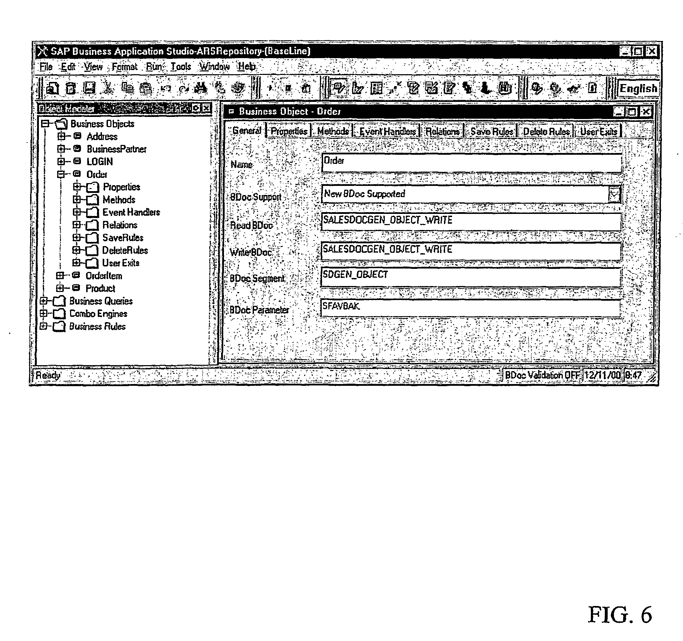

FIGS. 6-11 illustrate modeling screens and changelist management employed by modeler 445 in accordance with an embodiment of the present invention.

### Modeling Screens

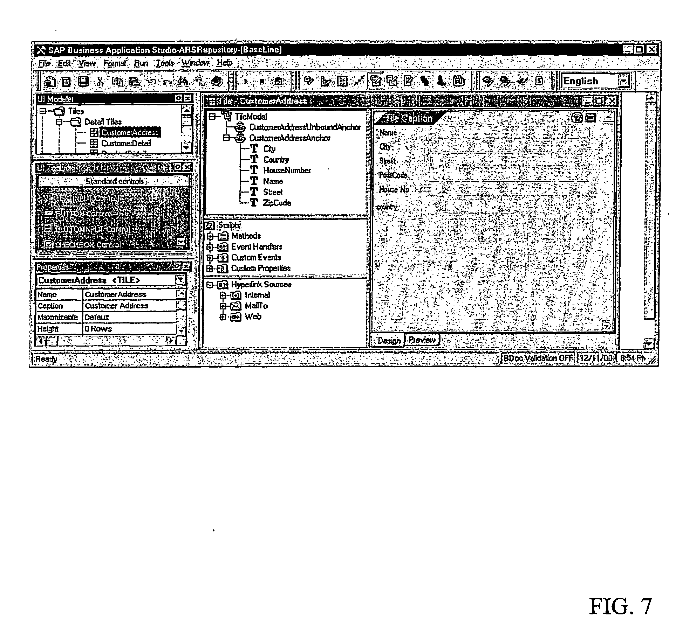

As shown in FIGS. 6 and 7, modeler 445 employs an object browser to enable application developers to view a hierarchical display of development objects to be generated into runtime application 460, and to model development objects for business logic layer 415 (FIG. 6) and presentation layer 410 (FIG. 7) of runtime application 460. A similar modeling environment may be employed to model development objects for persistence layer 420.

As an example, application framework 400 may define a business object type to represent the business logic for business logic layer 415 of runtime application 460. In the business world, one may wish to model a sales organization that offers products or services to various customers. Since the organization would need to store information on its customers and decide how to offer its products or services in different market segments, a business object could represent customers, contact persons, products, sales opportunities, sales activities and sales promotions.

A development object in modeler 445 may model each of the above business objects. For purposes of this discussion, although the term "object" may either refer to a class (i.e., object type 430) or an instance of a class (i.e., object instance 440), the term "object" is generally meant to portray an instance of a class, while the term "object type" is generally meant to portray the class itself.

Thus, as shown in the "Object Modeler" sub-window in FIG. 6, an application developer has modeled several development objects (e.g., "Address", "BusinessPartner", "LOGIN", "Order", "OrderItem" and Product") representing business objects. Since application framework 400 has also defined attributes for a business object, modeler 445 provides those attributes (e.g., "Properties", "Methods", "Event Handlers", "Relations", "SaveRules", "DeleteRules" and "UserExits") for development as shown under the "Order" object in the "Object Modeler" sub-window in FIG. 6. The application developer develops the attributes for the business object "Order" using the "Business Object - Order" sub-window in FIG. 6.

For example, the "Properties" attribute may represent the attributes of an entity of a real business world, such as a Sales Order object having properties like order number, order date, quantity. The "Methods" attribute may perform specific operations to manipulate data, such as a Sales Order object having a method to calculate and get the line items total. The "Event Handlers" attribute may describe a specific action that can occur against pre-defined events. The "Relations" attribute may define the interaction between different development objects based on business logic, such as a customer being associated to one or more sales orders. Business rules (e.g., the "SaveRules", "DeleteRules" and "UserExits" attributes) may validate the object data for consistency, such as allowing the creation of a rule for the Sales Order object to check if the range of the order amount is consistent.

FIG. 7 illustrates a similar modeling screen for UI objects, as defined by application framework 400, to represent the screen elements for presentation layer 410 of runtime application 460. As shown in the "UI Modeler" sub-window in FIG. 7, an application developer has modeled several development objects (e.g., "CustomerAddress", "CustomerDetail", etc.) representing tiles, which are UI objects similar to frames or sub-windows. The application developer develops the UI object "CustomerAddress" using the "Tile - CustomerAddress" sub-window in FIG. 7.

### Changelist Management

As stated above, modeler 445 uses application repository 520 in the development and testing of metadata 450. The framework-specific parts of application repository 520 represent an object repository and corresponding object navigational interface that provide for the storage and access of the development objects by modeler 445. Due to the importance of tracking changes in a parallel and distributed development environment, application developers may operate on a development object via changelists, which allow the developers to maintain different versions of the development object in the object repository. This provides isolation of work in a multiuser development environment, as depicted in FIG. 3.

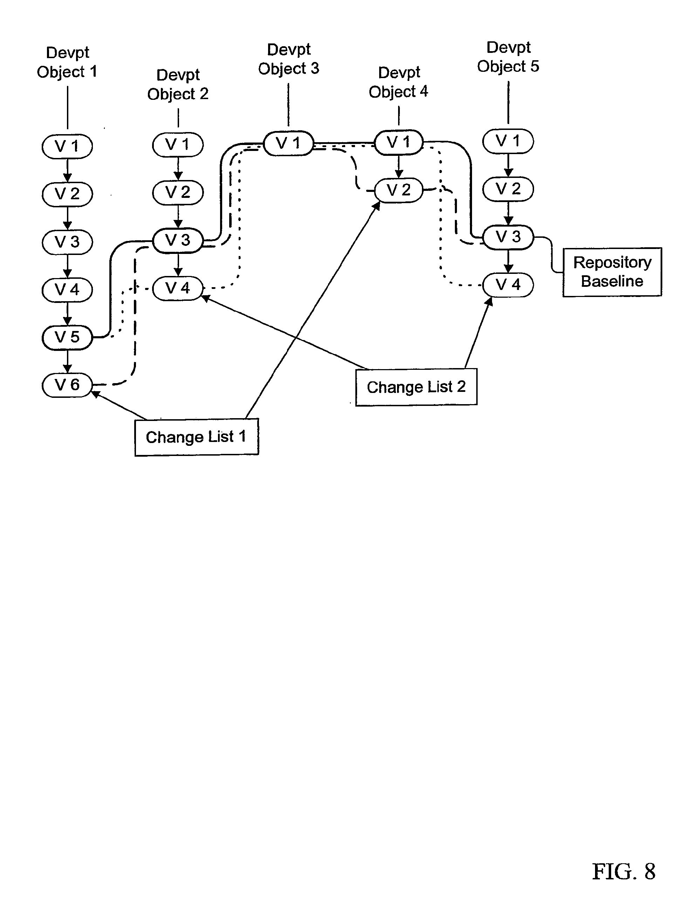

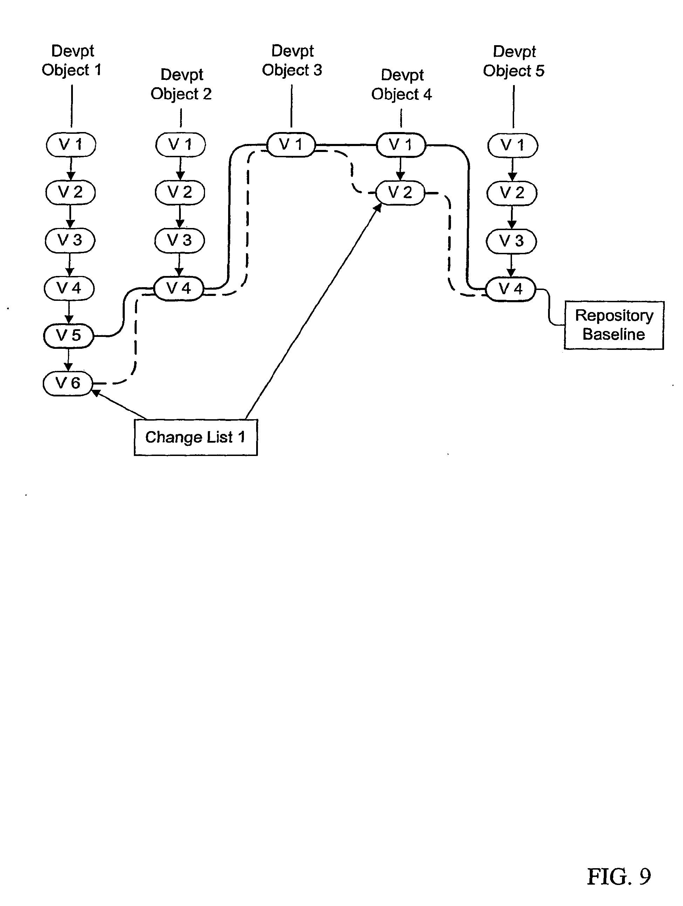

A changelist is a collection of open versions of new or existing development objects that are derived from the repository baseline. The repository baseline specifies the current closed version of a development object in the object repository. As illustrated in FIG. 8, the repository baseline includes version 5 of development object 1, version 3 of development object 2, version 1 of development objects 3 and 4, and version 3 of development object 5. Since a first application developer is working on development objects 1 and 4, the first developer's changelist includes version 6 of development object 1 and version 2 of development object 4. Since a second application developer is working on development objects 2 and 5, the second developer's changelist includes version 4 of development object 2 and version 4 of development object 5. As illustrated in FIG. 9, when the second developer releases her changelist to the baseline, version 4 of development objects 2 and 5 become part of the new repository baseline that is now available for development and testing by other developers.

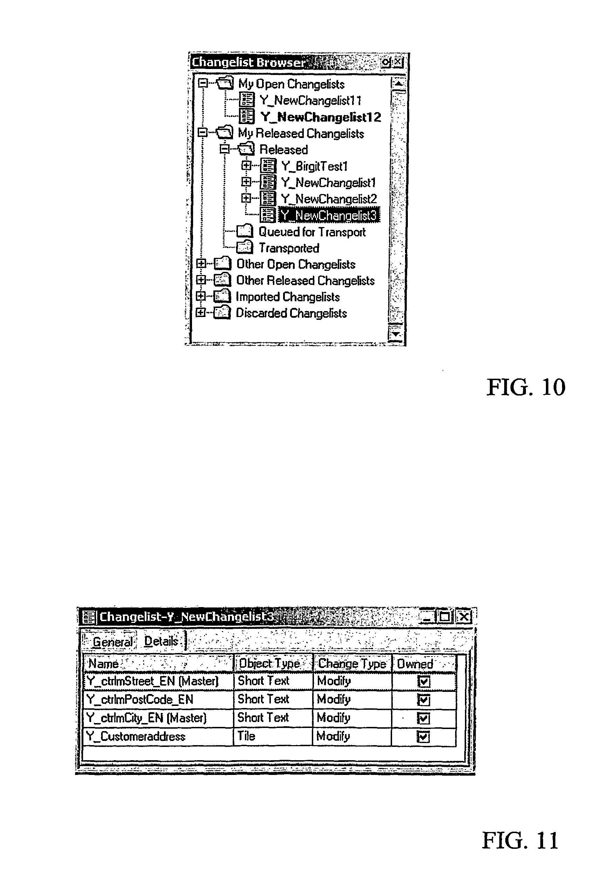

An application developer may manage changelists through a changelist browser, as shown in FIG. 10, which keeps track of both open and released changelists of the developer and others. The selection of a particular changelist, such as "Y_NewChangelist3" in the changelist browser in FIG. 10, may bring up an additional window describing the details of the development objects in that changelist, as shown in FIG. 11.

Modeler 445 may include known configuration management tools to handle version management issues such as branching, collisions, etc. when developers work on the same development objects at the same time.

### INCREMENTAL GENERATION BASED ON INVALIDATION RULES

Within a repository based application development environment, such as the one described above, an embodiment of the present invention may be implemented to enable application generator 455 to generate only those elements of runtime application 460 that have been invalidated through rule-based navigation. The implementation of invalidation rule based generation depends upon the structure of and relationship between metadata 450 and runtime application 460.

### Overview

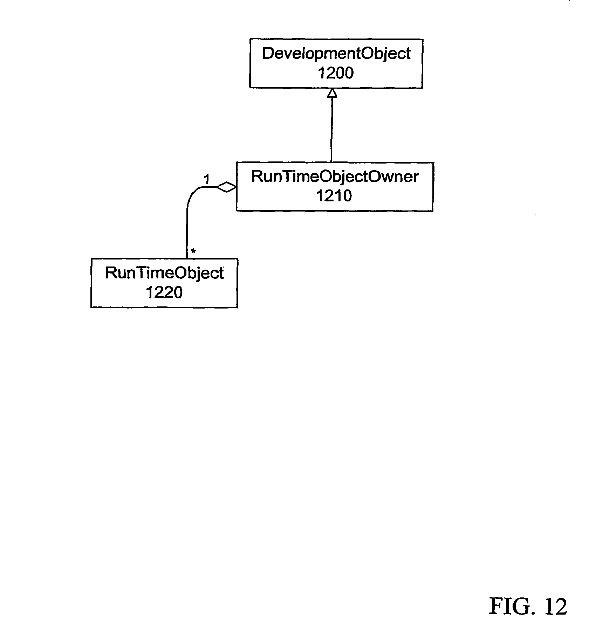

According to one embodiment of the present invention, the structure of metadata 450 and runtime application 460 may be represented in the object repository of application repository 520 based on the abstractions illustrated in the object repository model of FIG. 12. Development objects (DevelopmentObject 1200) represents the class of metadata 450, which is the pre-generation data representation of the development objects as modeled by application developers in modeler 445. This data representation, for example, could take the form of database tables wherein in each table represents a development object type, each column represents a particular development object and each row represents the attributes of a particular development object. Runtime objects (RunTimeObject 1220) represent the class of runtime files of runtime application 460 that are generated from the development object metadata to be executed by application framework 400. Examples of runtime files could be binary files, JAVA class files and HTML layout files. In this particular model, development obj ects are classified as main development objects (RunTimeObjectOwner 1220) if they are top level objects associated with runtime objects.

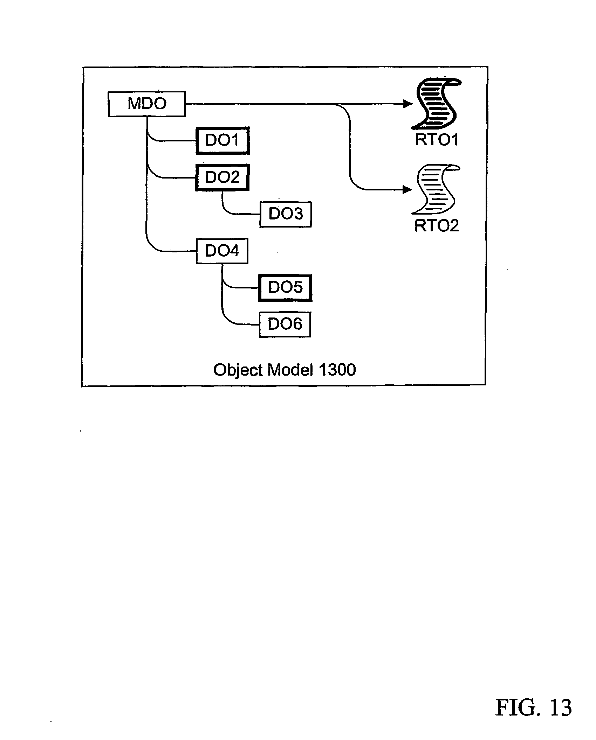

FIG. 13 illustrates an general framework object model (object model 1300) that may be defined by a framework developer based on the object repository model of FIG. 12. In FIG. 13, the framework designer creates MDO to represent a main development object type, and DO1 through DO6 to represent children development objects types associated with MDO. Runtime object types RTO1 and RT02 are associated with MDO, since MDO is the top-level object in accordance with the object repository model of FIG. 12.

Based on the requirements of application framework 400 and application generator 455 as defined by a framework developer, each runtime object type may only be influenced or affected by changes in a particular set of development object types. For example, during the modeling of specific instances of the framework object types of FIG. 13 in modeler 445, changes made to development objects of types MDO, DO1, D02 and DO5 may influence the associated runtime object of type RTO1, while changes made to development objects of types MDO, D03, D04 and DO6 may influence the associated runtime object of type RT02. These relationships may be formalized into a set of invalidation rules in advance of any application development, and can be used during application development to invalidate only the influenced runtime objects of a particular changed development object, so that application generator 455 only has to regenerate the invalidated runtime objects instead of all runtime objects.

### Navigation Grammar Based on Object Semantics

The invalidation rules may be formalized with an object navigation grammar in accordance with an embodiment of the present invention. For example, an object navigation grammar could define a navigation path through the object repository of application repository 520, starting from a changed development object and ending at that development object's main development object, which is associated with the runtime object that is influenced by the changed development object.

For example, the framework developer who created object model 1300 could formalize the associated invalidation rules as mentioned above using the following grammar:

| RTO1 Invalidation Rules | |
|---|---|
| AnyChange => DO5.parent.parent : | {RTO1} |
| AnyChange => DO2.parent : | {RTO1} |
| AnyChange => DO1.parent : | {RTO1} |

| RTO2 Invalidation Rules | |
|---|---|
| AnyChange => DO6.parent.parent : | {RTO2} |
| AnyChange => DO4.parent : | {RTO2} |
| AnyChange => DO3.parent.parent : | {RTO2} |

Using the first RTO 1 invalidation rule as an example, the object navigation grammar defines:
- the type of change required to fire the rule (e.g., "AnyChange"),
- the starting object type in the navigation path (e.g., "DO5"),
- the navigation path via role names (e.g., ".parent.parent"), and
- the type of the resultant runtime object that requires invalidation (e.g., "{RTO1}").

Based on these rules, if a development object of type D02 were changed by an application developer in modeler 445, the following of the above invalidation rules could be applied to determine which runtime objects are influenced by the changed D02 development object:

| | |
|---|---|
| AnyChange => DO2.parent : | {RTO1} |
| AnyChange => DO3.parent.parent : | {RTO2} |

The first of these rules is applied because the starting object type of the rule (D02) is that of the changed D02 development object. This first rule thus specifies that the RTO1 runtime object associated with the parent of the changed D02 development object should be invalidated. The second of these rules is applied because DO2 is in the navigation path of DO3 (i.e., D02 = DO3.parent), and thus the rule specifies that the RT02 runtime object associated with the parent of the changed DO2 development object (i.e., DO2.parent = DO3.parent.parent) should be invalidated. This second rule is applied because a corresponding DO3 development object associated with the changed D02 development object could have also been changed due to the change in the D02 development object. For instance, the D02 development object could have replaced its associated DO3 development object with a different DO3 development object, thus requiring invalidation of the changed D02 development object's influenced RT02 runtime object. If, in actuality, there is no corresponding DO3 development object associated with the changed D02 development, the rule merely specifies an unnecessary, but rather harmless, invalidation.

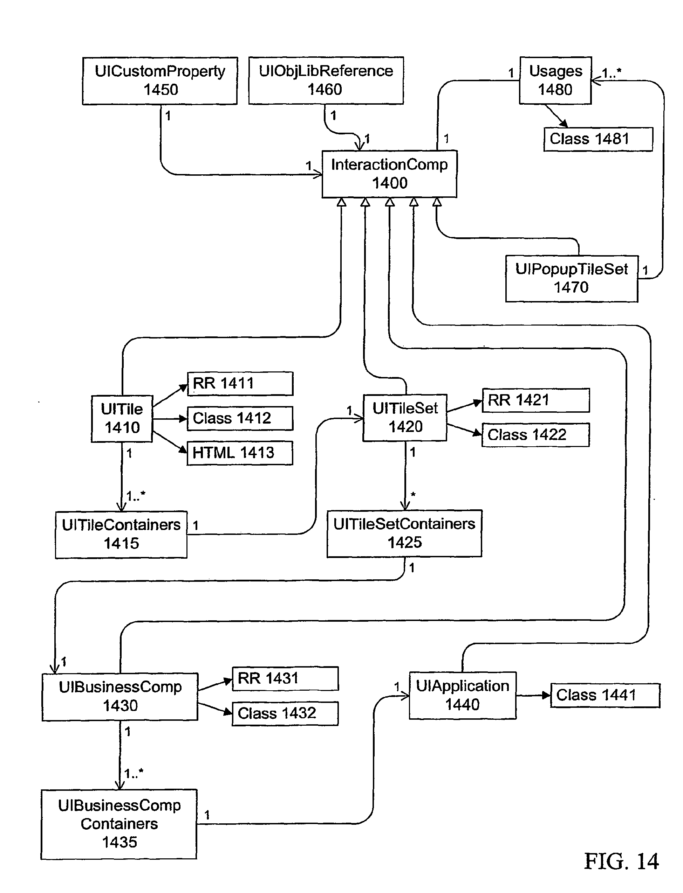

The actions that may be specified by this object navigation grammar can be further illustrated with respect to the more detailed framework object model of FIG. 14, which may represent the types of development obj ects to be used for modeling presentation layer 410 of runtime application 460. Each object in FIG. 14 is a development object type, except for the main development object types UITile 1410 (and it's corresponding runtime object types RR 1411, Class 1412 and HTML 1413), UITileSet 1420 (and it's corresponding runtime object types RR 1421 and Class 1422), UIBusinessComp 1430 (and it's corresponding runtime object types RR 1431 and Class 1432), UIApplication 1440 (and it's corresponding runtime object type Class 1441), and Usages 1480 (and it's corresponding runtime object type Class 1481). The RR runtime objects may refer to binary files. The grammar may specify:
• navigation to associated object or associated collection, specified by "."
The cardinality of the relation can be 1 or many. For example:
a. navigation to associated object with cardinality 1 may be specified as: **UIObjLibReference.InteractionComp**
b. navigation to associated object with cardinality more than one may be specified as: **UITileset.UITilesetContainers**

• downcasting a pointer of an object to its sub class, specified by enclosing the class to be cast to in "[]"
For example:
a. **InteractionComp [UITile]**
b. **InteractionComp [UITileset]**

• upcasting a pointer of an object to its super class, specified by enclosing the class to be cast to in "[^]"
For example:
a. **UIBusinessComp[^InteractionComp]**

• repeating any of the above operations or sets of operations zero or more number of times, specified by enclosing them in "()*"
For example:
a. **UICustomProperty.(InteractionComp[UIPopupTileset].Usages)***

• the runtime object to be invalidated, specified in "{ }" following "::"
There could be more than one runtime object to be invalidated. More than one runtime object can be specified in "{ }" separated by comma. For example:
a. **UITile:: {class, HTML}**
b. **UITileset::{class, RR}**

• the change type that will trigger the firing of a particular invalidation rule, specified by prefixing the rule with **'<change type>=>'** where the <change type> can be one of the following: '**Create', 'Add', 'Modify','Delete'**
For example:
a. **modify=>UICustomProperty.(InteractionComp[UIPopupTileset].Us ages)*:: {class}**

• language dependent rules and runtime objects
The grammar may handle language dependency at two levels. Firstly, a rule itself may be specified as a language dependent/independent rule and secondly, the runtime object which has language dependency can further define the scope of invalidation with respect to language. The languages on which the rule or the runtime object is dependent may be specified in "<>" separated by commas. For example:
a. **modify=><EN>Parent[UITile]::{HTML<EN, DE>, class>}**
Here the HTML runtime object needs to be invalidated in EN and DE languages. Class needs to be invalidated but it is language independent. **"HTML<LANG*>"** would specify all languages.
• predicates to be evaluated to resolve ambiguous object constructions
In some cases, an invalidation rule should specify information beyond a simple navigation path in order to allow efficient use of the rule. For example, this additional information may be used to evaluate the context of objects that may have ambiguous constructions in the associated object model. For instance, the following two relations may be defined between a tile object and a text object:

| Objet Type (Role) | (Role) Objet Type |
|---|---|
| Tile (parent) - - - - - | - - - - - (caption) Text |
| Tile (parent) - - - - - | - - - - - (status) Text |

Since the tile object type has the same role name for both relations, an invalidation rule for a caption text would be indistinguishable from an invalidation rule for a status text, namely "anychange=>Text.parent...". Thus, in order to avoid unnecessary invalidations, an additional meta rule may be specified that would allow one to disambiguate an object construction so that a determination can be made as to which rule should be fired. For example:
a. **modify=><EN><<LanguageText.Parent[UITile].Caption»LangTex t.Parent[UITile]::{HTML<EN>}**
The part of the rule, such as **<<LanguageText.Parent[UITile].Caption>>** is known as a meta rule that helps in disambiguation and determining which rule has to be fired. Without this metarule, every rule with a text object type not associated with a caption may have been needlessly fired, possibly causing great inefficiencies.
• several invalidation rules combined together
For example, modification of UICustomProperty 1450 of InteractionComp 1400 (which could be any of UITile 1410, UITileset 1420, UIBusinessComp 1430 and UIApplication 1440) may require invalidating the class file of the corresponding interaction component. The rules to specify are:
**modify=>UICustomProperty.InteractionComp [UITile] :: {class}"**
**modify=>UICustomProperty.InteractionComp[UITileset] :: {class}"**
**modify=>UICustomProperty.InteractionComp[UIBusinessComp]::{ class}"**
**modify=>UICustomProperty.InteractionComp [UIApplication] :: {cla ss}"**
The above rules could be clubbed together as:
**modify=>UICustomProperty.InteractionComp[UITile, UITileset,**
**UIBusinessComp, UIApplication]->{class}"**
When UICustomProperty 1450 changes, this rule would be interpreted to invalidate the class file of the corresponding InteractionComponent 1400, which could be any of UITile 1410, UITileset 1420, UIBusinessComp 1430 and UIApplication 1440.

### Rule Objects

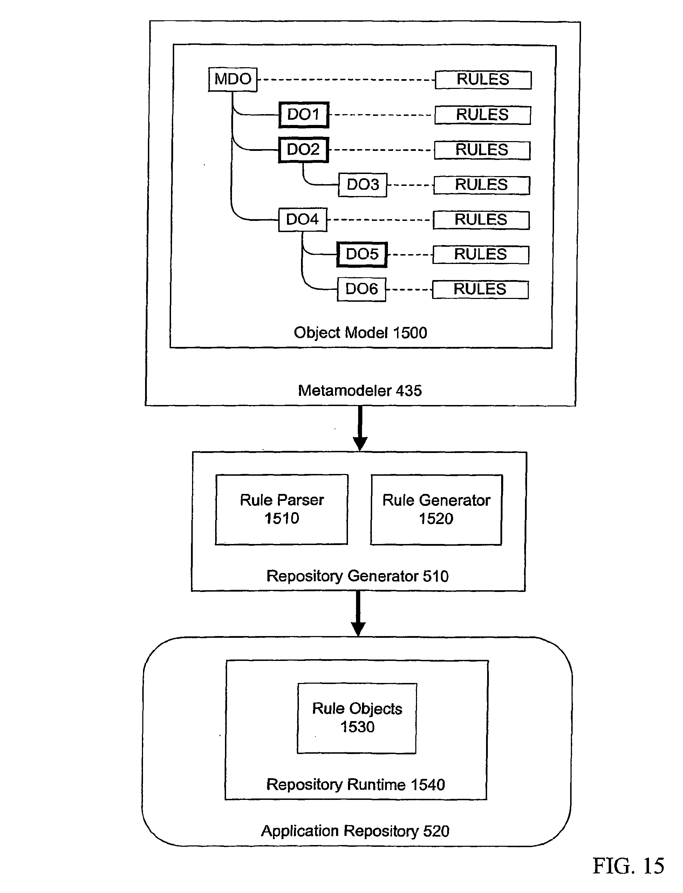

FIG. 15 illustrates how navigation grammar based invalidation rules may be generated into the runtime of application repository 520 for runtime execution. Initially, a framework developer defines in metamodeler 435 an invalidation rule for each framework object type in object model 1300 that is relevant with respect to a corresponding runtime object to be generated. This could be implemented in one particular embodiment by adding property pages to the specification of certain UML elements in the Rational Rose modeling software. Repository generator 510 may then extract the object model 1500 information from metamodeler 435 and dump it into an XML file for subsequent processing.

### Grammar Completion

Before dumping the invalidation rules into an XML file for further processing, repository generator 510 may first create rule parser 1510 so that syntactic correctness of the invalidation rules may be enforced. Repository generator 510 may create rule parser 1510 by first completing a framework-specific grammar file. This can be accomplished by incorporating information such as class names and role names from object model 1500 (e.g., from the Rational Rose .mdl file) into a generic grammar file based on the above-described grammar specification.

In order to illustrate a generic grammar file according to object model 1500, the following relations are presumed to be defined in object model 1500:

| Objet Type (Role) | (Role) Objet Type |
|---|---|
| MOD (parent) - - - - - | - - - - - (child1) DO1 |
| MOD (parent) - - - - - | - - - - - (child2) DO2 |
| MOD (parent) - - - - - | - - - - - (child3) DO4 |
| DO2 (parent) - - - - - | - - - - - (child21) DO3 |
| DO4 (parent) - - - - - | - - - - - (child31) DO5 |
| DO6 (parent) - - - - - | - - - - - (child32) DO6 |

Thus, the following represents the contents of a generic grammar file based on object model 15 in accordance with an embodiment of the present invention:

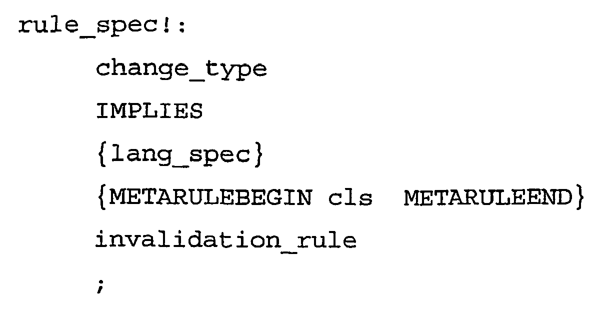

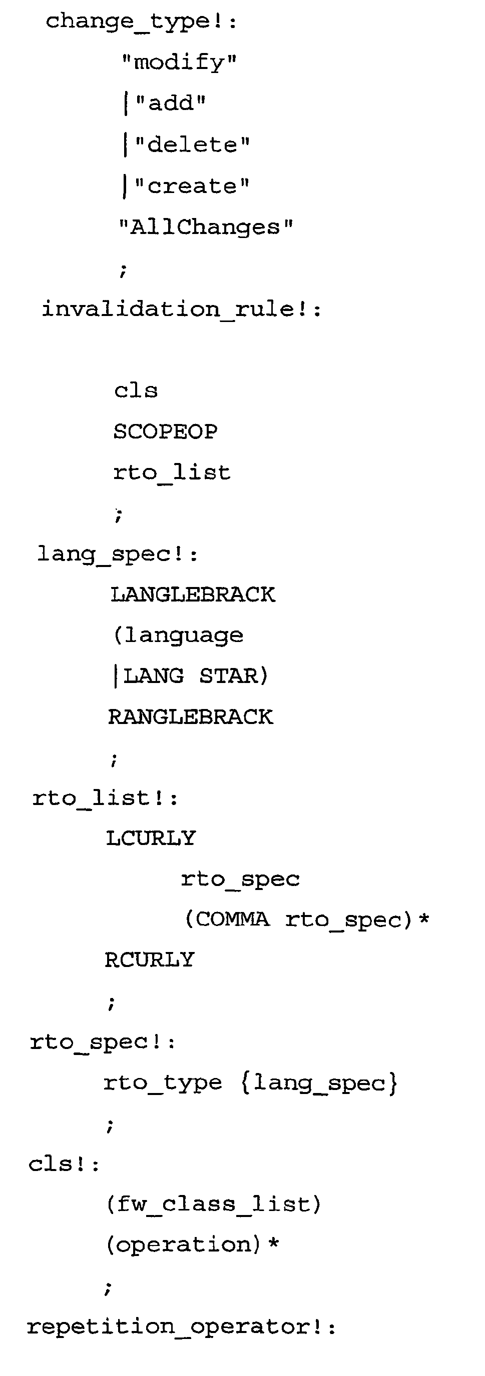

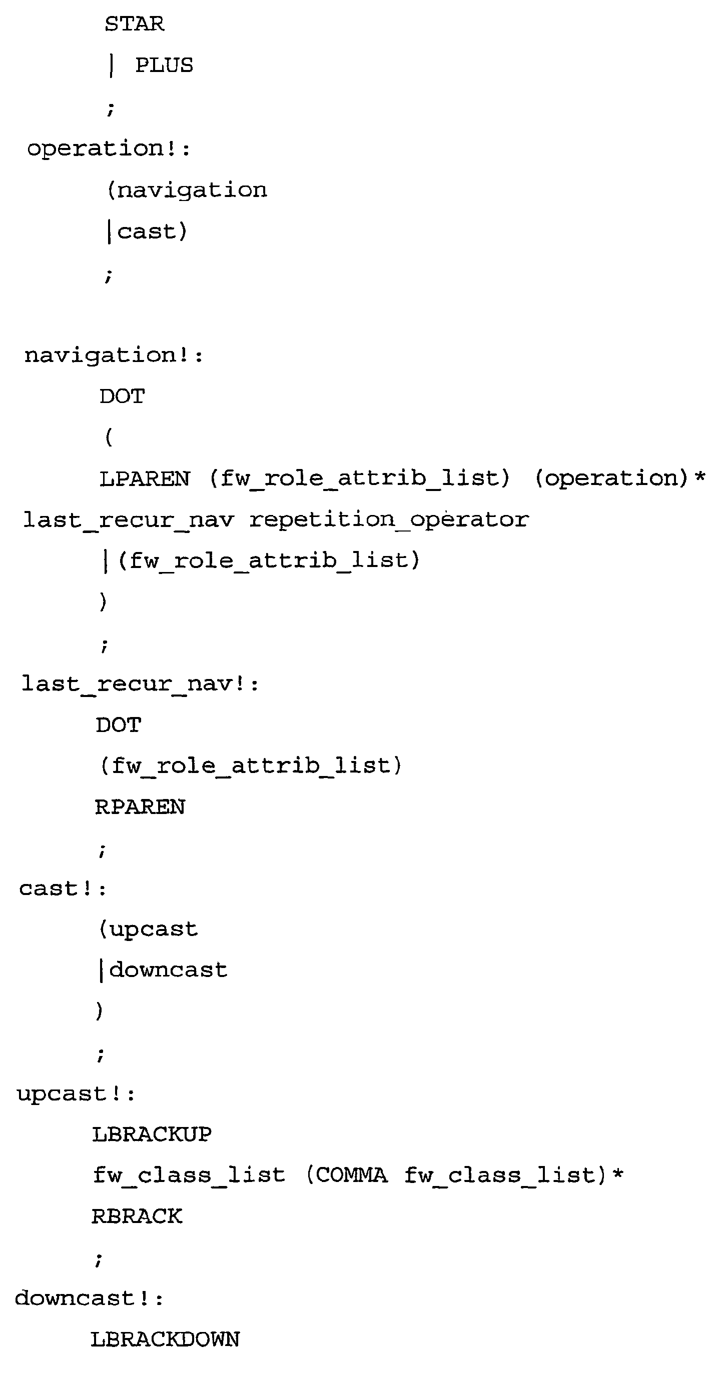

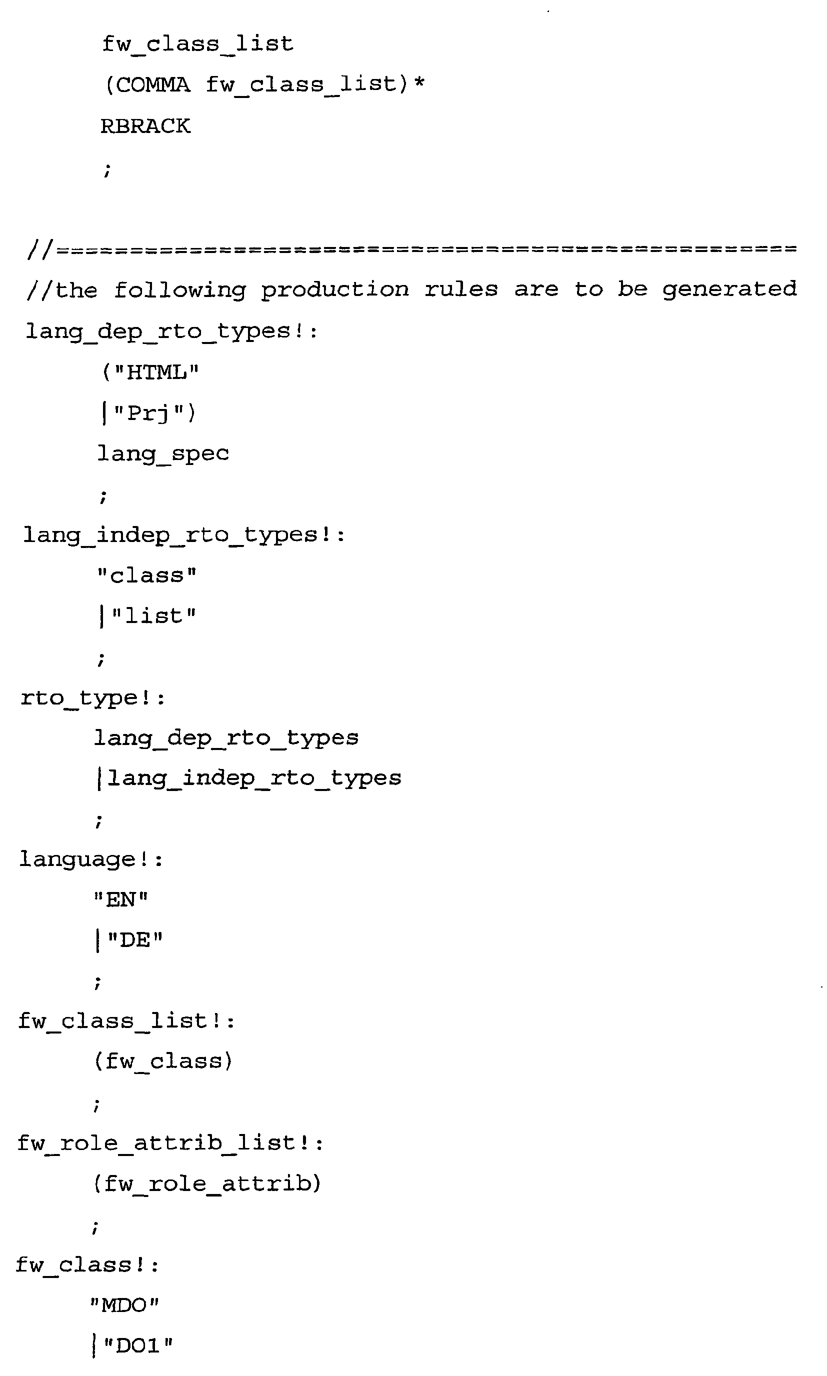

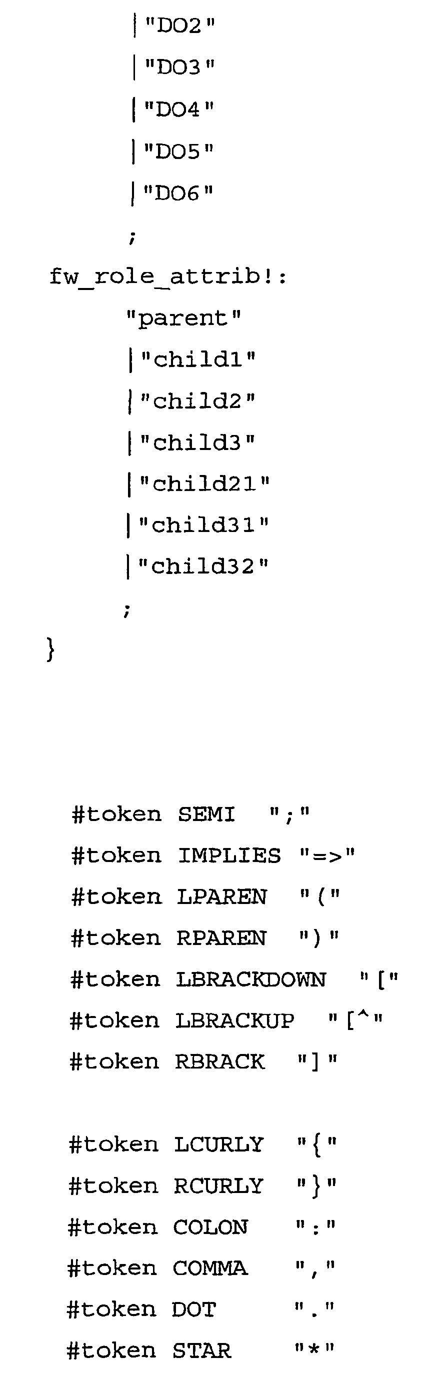

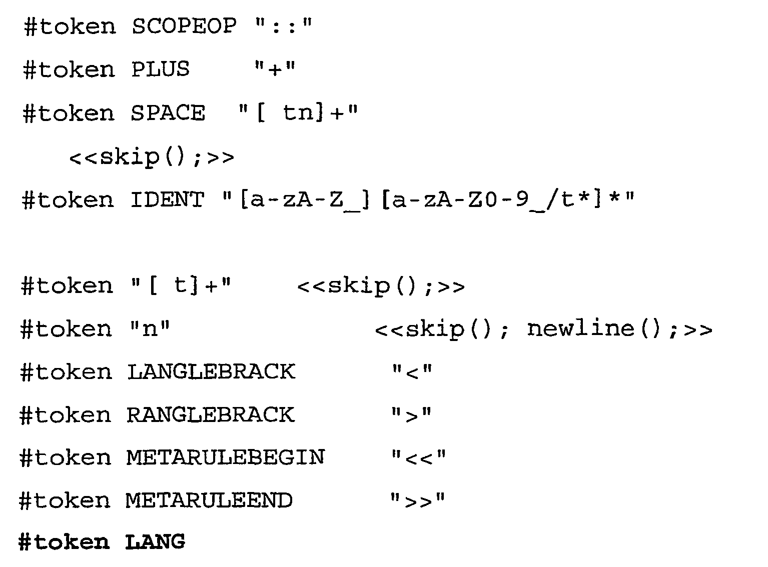

### "LANG"

As seen from the contents of the above grammar file, the generic framework-independent portion of the grammar file resides above the comment line stating "the following production rules are to be generated." The framework-dependent portion of the grammar file resides below that comment line, which is where repository generator 510 may insert the relevant model information to complete the grammar. Once the grammar is completed, repository generator 510 may then pass the grammar file to a known parser generator (such as ANTLR/PCCTS) to generate rule parser 1510, which may then be incorporated into repository generator 510.

### Rule Object Generation

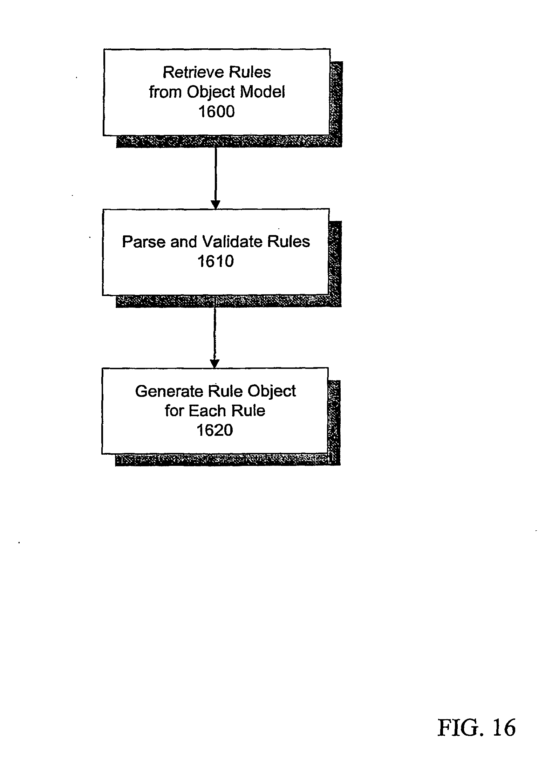

As described in FIG. 16, repository generator 510 may then retrieve the invalidation rules from object model 1500 (step 1600), and parse and validate the rules (step 1610). In parsing the rules, rule parser 1510 may check for syntactic correctness of each rule based on the specified object navigation grammar, and check for correctness of class names and role names based on the specified object model 1500. Repository generator 510 may validate the rules, for example, by using object model 1500 to ensure that casting operations and navigation paths are supported by the model, as well as making sure that the rule ends with a main development object type (instead of a development object type) and that the runtime object type to be invalidated is properly associated with the ending main development object type. After the rules are parsed and validated, repository generator 510 may dump them into an XML file for subsequent processing.

Rule Generator 1520 may read the invalidation rules from the XML file and, using XSL transformations, generate for each rule a corresponding rule object (rule objects 1530) to be compiled into repository runtime 1540 (step 1620) of application repository 520. According to one embodiment of the present invention, each rule object is generated with a "navigate" function that:
- receives as input a development object (or a reference to the development object) of a type that resides anywhere in the rule's navigation path,
- navigates using object instances, starting from the received object type's location in the navigation path and proceeding through the subsequent steps of the navigation path, and
- returns any resultant runtime object (or a reference to the runtime object) of a type • required by the rule.
In this manner, the rule object's "navigate" function may be invoked to determine the runtime objects, if any, that are influenced by a changed development object that lies anywhere in the rule's navigation path. The rule object's "navigate" function is overloaded to allow for the input of a development object of any type that is listed in the rule's navigation path.

So that a determination can be made of which development object types are listed in a rule object's associated navigation path, rule generator 1520 generates each rule object with the functionality to provide this information. In addition, each rule object may also be generated with functionality to additionally provide a listing of any influenced runtime object types specified at the end of the rule. This combined functionality could enable an index to be constructed for fast runtime rule determination. For example, assuming rule objects are generated for the RTO1 and RTO2 invalidation rules provided earlier (from the discussion of FIG. 13), the following is a collection of the listings that may be provided by each of the rule objects:

| Rule Object | DO Types | RTO Types |
|---|---|---|
| Rule Object 1 | DO1, MDO | RTO1 |
| Rule Object 2 | DO2, MDO | RTO1 |
| Rule Object 3 | DO3,DO2,MDO | RTO2 |
| Rule Object 4 | DO4,MDO | RTO2 |
| Rule Object 5 | DO5,DO4,MDO | RTO1 |
| Rule Object 6 | DO6,DO4,MDO | RTO2 |

Rule Object 1 corresponds to the rule with starting object type DO1, Rule Object 2 corresponds to the rule with starting object type D02, etc.

Based on these lists, repository runtime 1540 can generate the following index:

| Changed DO Type | Relevant Rule Objects |
|---|---|
| MDO | 1,2,3,4,5,6 |
| DO1 | 1 |
| DO2 | 2,3 |
| DO3 | 3 |
| DO4 | 4,5,6 |
| DO5 | 5 |
| DO6 | 6 |

This index is constructed by matching each development object type with each rule object that lists the development object type in its rule's navigation path. Repository runtime 1540 may use this index during runtime to immediately determine which rule objects' "navigate" function should be invoked when a development object is changed. In an actual development environment with a large number of rules and associated object types, this index can achieve substantial time savings during runtime because it eliminates the need for repository runtime 1540 to check each rule object for its relevance with respect to a development object every time it changes.

### Incremental Generation

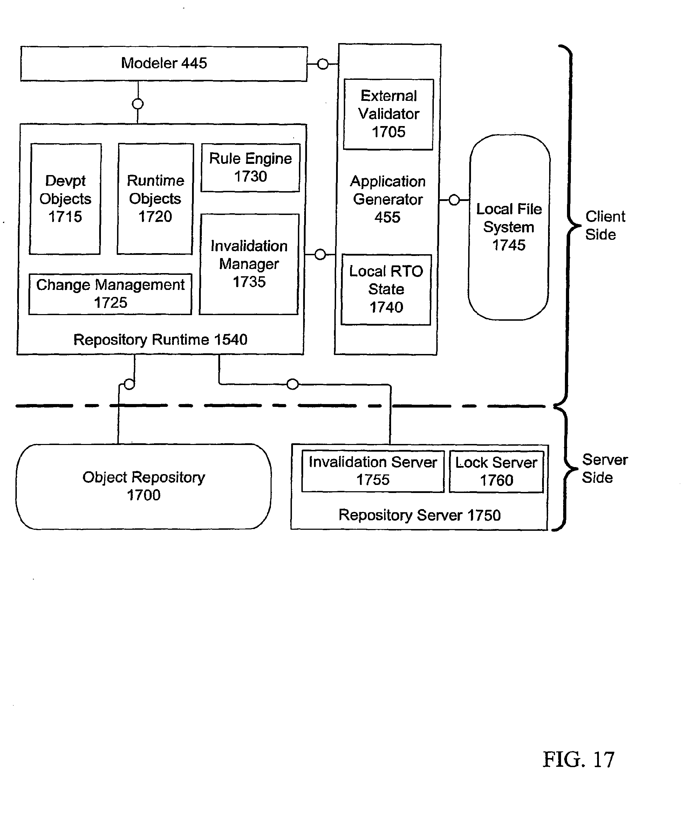

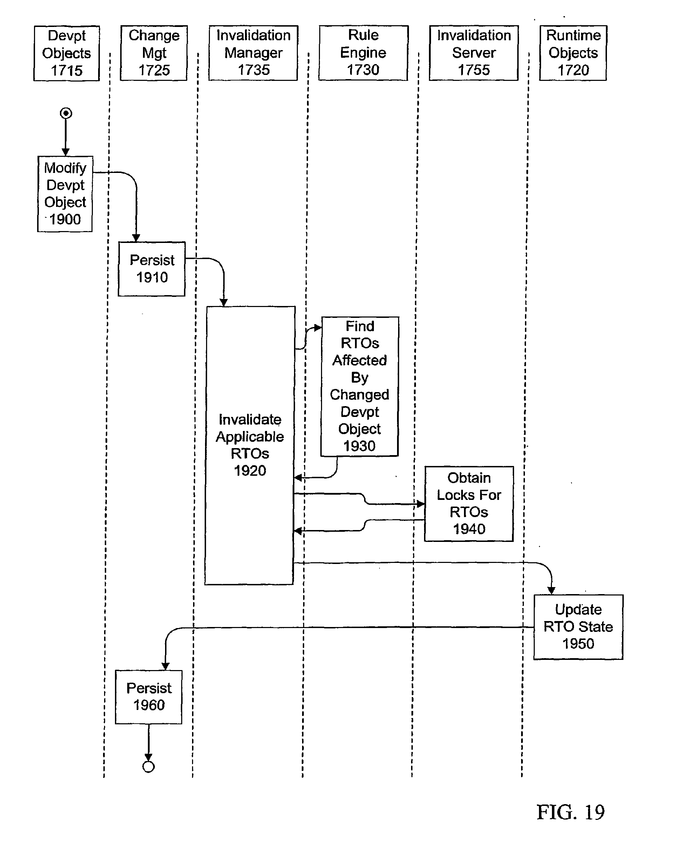

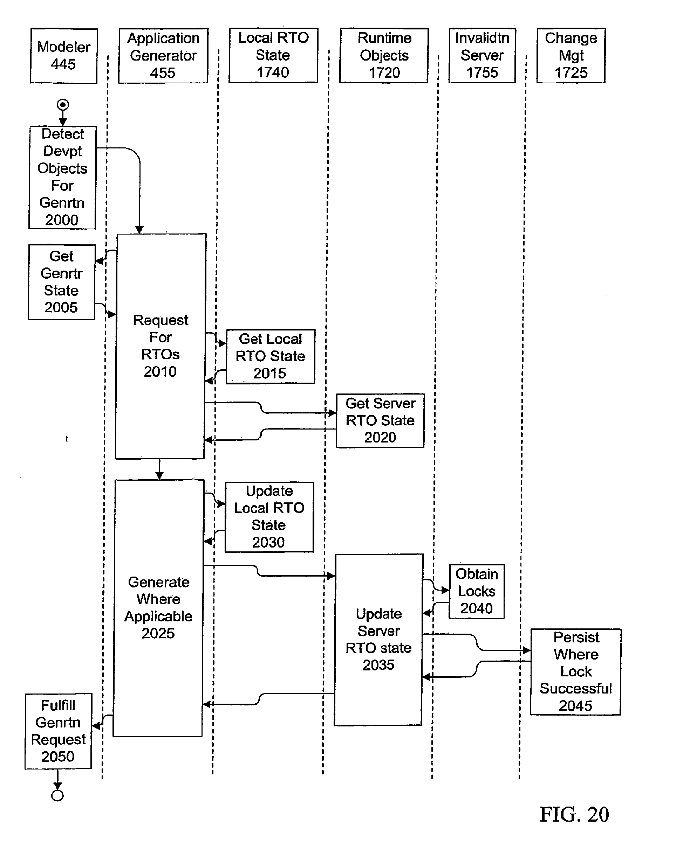

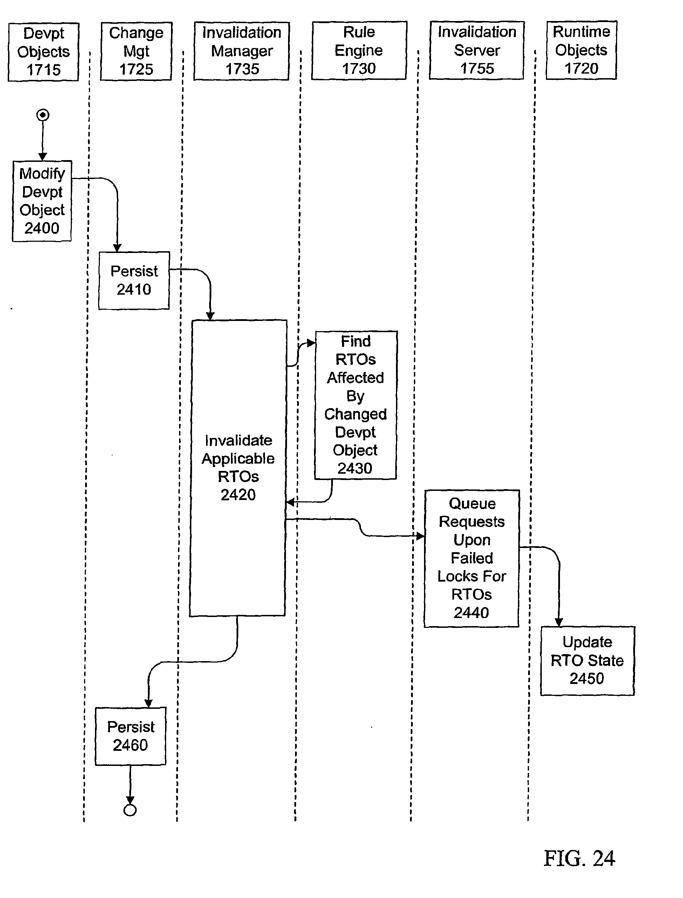

Within a repository based application development environment as illustrated in FIG. 17, an embodiment of the present invention may be implemented to enable application generator 455 to generate (FIG. 20) only those runtime objects that have been invalidated (FIGS. 19, 24) through rule-based navigation. As illustrated below, this embodiment scales to support many client side developers by centrally storing development objects and runtime objects (either baseline version or changelist version) on the server side in object repository 1700, while allowing each developer client to maintain cached copies of these objects locally.

Repository runtime 1540 may include several components, such as development objects 1715, runtime objects 1720, rule engine 1730, rule objects 1530, change management 1725 and invalidation manager 1735, that may implement particular client side functionality of application repository 520. Application generator 455 may similarly include several components, such as local runtime object state 1740 and external validator 1705, that may implement particular functionality in the generation of runtime objects. Repository server 1750 may include several components, such as invalidation server 1755 and lock server 1760, that may implement particular server side functionality of application repository 520.

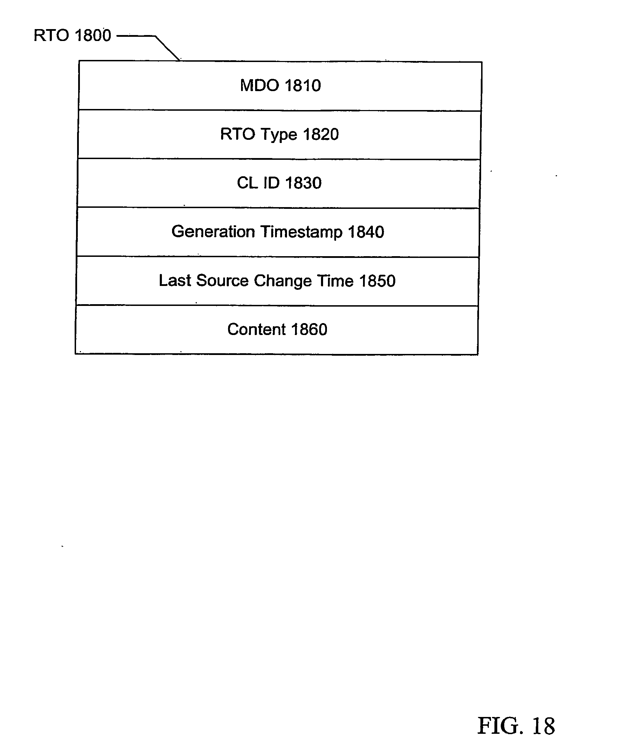

According to this embodiment, application generator 455 initially generates all new development objects into corresponding runtime objects, which are persisted to both local file system 1745 and object repository 1700. These runtime objects may be represented by the RTO 1800 data structure as shown in FIG. 18, which may include MDO 1810, RTO type 1820, CL ID 1830, generation timestamp 1840, last source change time 1850 and content 1860. MDO 1810 may represent the main development object (or pointer thereto) from which the runtime object was generated. RTO type 1820 may represent the runtime object's particular runtime object type. CL ID 1830 may represent an identifier denoting whether the runtime object was generated from a main development object in the baseline or in one of many developer changelists. Generation timestamp 1840 may represent the time that the runtime object was persisted to object repository 1700 after being generated by application generator 455. Last source change time 1850 may represent the most recent time that the main development object from which the runtime object was generated had been changed. And content 1860 may represent the actual content (or pointer thereto) of the runtime object (e.g., class file, binary file, etc.).

Invalidation of runtime objects may occur when, as illustrated in FIG. 19, an application developer uses modeler 445 to make changes to development objects that are in the developer's changelist (step 1900). When the developer attempts to persist the changed development objects to local file system 1745 (step 1910), invalidation manager 1735 initiates an invalidation process (step 1920) that first determines all runtime objects that may be influenced by the changed development objects (step 1930). This determination may be quickly made through invocation of the "navigate" function of relevant rule objects that are selected from an index, as described above, of changed development object types and relevant rule objects. Once invalidation server 1755 obtains locks from lock server 1760 for accessing the influenced runtime objects in object repository 1700 (step 1940), invalidation manager 1735 invalidates the influenced runtime objects by marking their state as invalid in object repository 1700 (step 1950). Their state may be marked as invalid by updating the last source change time 1850 field of their runtime object data structures. (Instead of the last source change time 1850 field, RTO 1800 may utilize a boolean field that indicates whether the runtime object state is valid (e.g., TRUE) or invalid (e.g., FALSE).) Once this is completed, the changed development object is persisted to local file system 1745 (step 1960). A similar invalidation process may occur when a developer releases the development objects to the baseline, except that the development objects are stored in object repository 1700.

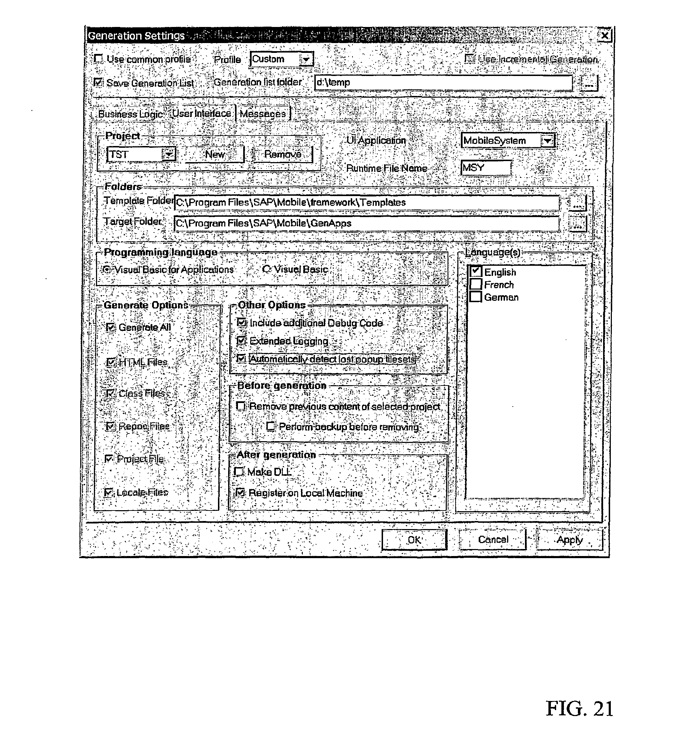

To improve generator efficiency, only invalidated runtime objects are regenerated, as illustrated in FIG. 20. When an application developer wishes to test changed development objects, for example, the developer may explicitly request, through the user interface of modeler 445, the generation of any corresponding runtime objects. In order to comply with this request, modeler 445 first identifies the development objects that have been changed (step 2000) by looking to the current changelist. Modeler 445 then requests the needed runtime objects from application generator 455 (step 2010) by providing application generator 455 with a list of the current changelist development objects. Application generator 455 determines from this changelist which runtime objects are needed based on the framework object model information and object navigation. Application generator 455 also retrieves from modeler 445 the current generator state (step 2005), which specifies user-selected settings that define how application generator 455 is to generate any runtime objects. FIG. 21 illustrates a generator settings window that a developer may use to define the generator settings.

Next, for each requested runtime object, application generator 455 retrieves the local state of the runtime object (generation timestamp 1840 of local RTO 1800) from the runtime object in local file system 1745 (2015), and retrieves the server state of the runtime object (generation timestamp 1840 and last source change time 1850 of the server RTO 1800) from the runtime object in object repository 1700 (step 2020). If the server state is valid (i.e., the last source change time is not more recent than the generation timestamp), and the server generation timestamp is not more recent than the local generation timestamp, then generation is not necessary (step 2025) because the local runtime object is valid and current. If the server state is valid but the server generation timestamp is more recent than the local generation timestamp, generation is still not necessary (step 2025) but the local runtime object is not current. In this case, application generator 455 retrieves the more recent runtime object from object repository 1700 and updates the local generation timestamp with the server generation timestamp 1840 (step 2030). If the server state is invalid (i.e., the last source change time is more recent than the generation timestamp), application generator 455 regenerates the runtime object (step 2025), updates the local generation timestamp (step 2030), and, upon obtaining a lock for the runtime object in object repository 1700 (step 2040), updates the server generation timestamp and the server last source change time (step 2035) and persists the regenerated runtime object in object repository 1700 (step 2045). The requested runtime object is then stored in local file system 1745 for use by the application developer in modeler 445, fulfilling the request (step 2050).

### Validation Based On Generator State

The generator state mentioned in step 2005 specifies user-selected settings that define how application generator 455 is to generate any runtime objects. As shown in FIG 21, two possible settings are listed under the heading "Other Options" and include "Include additional Debug Code" and "Extended Logging". When the "Include additional Debug Code" option is checked, for example, application generator 455 generates a logging call at the beginning and end of each application method, such as "gServices.Log 'Entering method' & MethodName" and "gServices.Log 'Exiting method' & MethodName". When the "Extended Logging" option is checked, application generator 455 report all generation messages, such as warnings and informational messages, instead of only the errors.

When application generator 455 checks the validity of a runtime object in step 2020 to determine whether it requires regeneration, application generator 455 looks to the runtime object's last source change time field in order to determine if the runtime object requires regeneration (i.e., is invalid) due to a change in a development object upon which the runtime object depends. According to another embodiment of the present invention, even if the runtime object is valid, application generator 455 (via external validator 1705) may also check whether the runtime object was last generated according to the current generator state. If not, application generator 455 may regenerate it according to the current generator state.

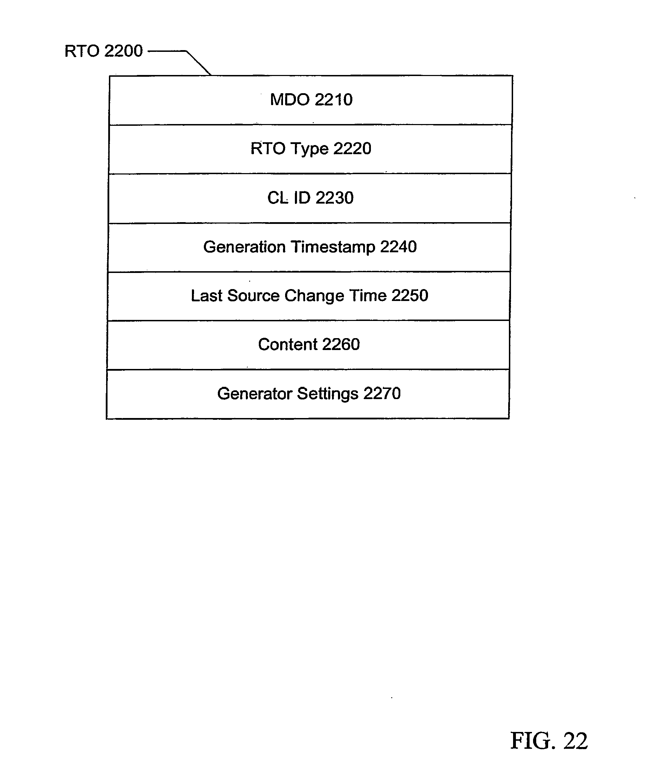

This generator state validation mechanism may be implemented by representing runtime objects by the RTO 2200 data structure as shown in FIG. 22. This data structure is identical to the RTO 1800 data structure discussed above, except that RTO 2200 may additionally include the generator state that was employed during the runtime object's last generation. For example, content 2260 may represent the content (or pointer thereto) of RTO 2200 that was generated with the "Include additional Debug Code" generation setting enabled (i.e., checked); generator settings 2270 may represent the "Include additional Debug Code" generation setting. Generator settings 2270 may represent the generator state in any form, including a textual description of the generator settings and/or a hash code corresponding to the textual description of the generator settings. Using such a hash code enables external validator 1705 to quickly compare the current generator state with a generator settings 2270 field in steps 2015 and 2020 during runtime.

### Locking

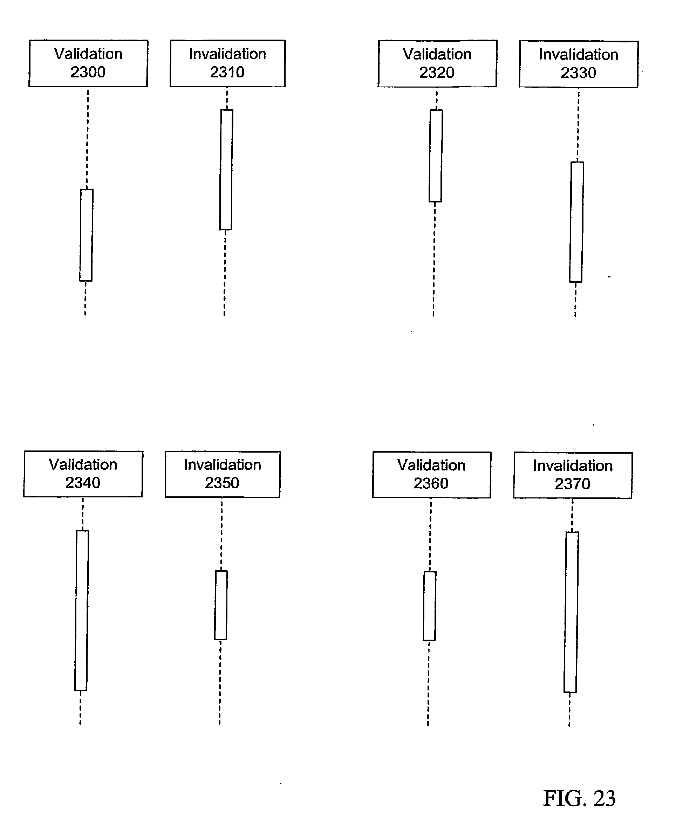

According to the embodiments illustrated in FIGS. 19 and 20, in order to invalidate (step 1950) and validate (step 2045) runtime objects, invalidation server 1755 first obtains locks from lock server 1760 (steps 1940 and 2040, respectively) in order to proceed with the corresponding invalidation/validation. When invalidation and validation requests interfere with each other, as depicted by the request lifetime bars in FIG. 23, the later request fails to obtain a lock from lock server 1760, causing the request to block (i. e. , wait) until the earlier request has completed. For example, validation 2300 is blocked by invalidation 2310 because invalidation 2310 secured the appropriate lock first. Similarly, invalidation 2330, invalidation 2350 and validation 2360 all have to block based on the embodiments according to FIGS. 19 and 20.

FIG. 24 illustrates an embodiment of the present invention that prevents such blocking by queuing invalidation requests for later processing when the invalidation requests intersect validation requests. To illustrate, validation steps 2400,2410, 2420 and 2430 of FIG. 24 mirror validation steps 1900,1910, 1920 and 1930 of FIG. 19.

However, in step 1940 invalidation server 1755 blocks until it obtains locks from lock server 1760 (step 1940) to update the runtime object state. In step 2440, on the other hand, when invalidation server 1755 fails to obtain locks from lock server 1760 due to an interfering request, it queues the invalidation request (step 2440) and informs invalidation manager 1735 that the request has been queued. The changed development object then proceeds to be persisted to local file system 1745 (step 2460) without the server runtime object state updated. Once the interfering request is complete, invalidation server 1755 obtains a lock for the queued invalidation request and proceeds to update the runtime object state (step 2450).

The queueing of server invalidation requests preserves the integrity of the server runtime object state, since the invalidation requests are not discarded and eventually invalidate all influenced runtime objects on the server. Server validation requests, on the other hand, may be discarded to prevent blocking, since the server runtime object would still correctly reflect that the runtime object is outdated (causing another generation at the next validation request). In each of these situations, the server runtime object state correctly indicates the server runtime object state.

Several embodiments of the invention are specifically illustrated and/or described herein. However, it will be appreciated that modifications and variations of the invention are covered by the above teachings.

## Claims

1. A computer system for selectively generating runtime objects in an application development environment, comprising:
a metamodeller (435) configured to receive specification of development object types defined by an application framework (400);
a modeller (445) configured to receive from an application developer specification of development objects (1715), each development object being of a respective development object type;
an invalidation manager component (1735) configured to receive an indication that one of said development objects (1715) of an associated development object type (MDO) has been changed, determine (1930) which runtime objects from a set of runtime objects (1720) are influenced by the changed development object, each runtime object having a respective runtime object type (RTO1; RT02), and invalidate (1950) the influenced runtime objects, wherein the determination of runtime objects is based upon invalidation rules (1530) specifying runtime object types (RTO1; RT02) influenced by changes in development objects (1715) of particular development object types (MDO); and
a generator component (455) configured to receive a request for a runtime object from the set of runtime objects (1720) and regenerate the requested runtime object from its corresponding development objects if the requested runtime object has been invalidated.

2. The system of claim 1, wherein the indication is received when changes to the development object on a changelist are persisted to central storage (1700).

3. The system of claim 2, wherein the indication is received when the development object is released to the baseline.

4. The system of claim 2, wherein the influenced runtime objects are determined by navigation of an object model (1500) based on the invalidation rules (1530).

5. The system of claim 4, wherein the invalidation rules (1530) further specify an object navigation path based on the object model (1500).

6. The system of claim 2, wherein the influenced runtime objects are invalidated by marking (1950) a state associated with each influenced runtime object as invalid.

7. The system of claim 1 wherein the system is configured to lock (2040) runtime objects influenced by the changed development object.

8. The system of claim 7, wherein the system is configured to determine whether an influenced runtime object can be locked, and when an influenced runtime object cannot be locked, is configured to queue (2440) a request to invalidate said influenced runtime object.

9. A computer-implemented method for selectively generating runtime objects in an application development environment, comprising:
receiving, by a metamodeller (435), specification of development object types defined by an application framework (400);
receiving, by a modeller (445) from an application developer, specification of development objects, each development object being of a respective development object type;
receiving an indication that one of said development objects of an associated development object (MDO) type has been changed;
determining which runtime objects from a set of runtime objects (1720) are influenced by the changed development object, each of the runtime objects having a respective runtime object type (RTO1; RTO2), and the determining being based upon invalidation rules (1530) specifying runtime object types (RTO1; RT02) influenced by changes in development objects (1715) of particular development object types (MDO);
invalidating (1950) the influenced runtime objects;
receiving a request for a runtime object from the set of runtime objects; and
regenerating the requested runtime object from its corresponding development objects if the requested runtime object has been invalidated.

10. The method of claim 9, wherein the indication is received when changes to the development object on a changelist are persisted to central storage (1700).

11. The method of claim 9, wherein the indication is received when the development object is released to the baseline.

12. The method of claim 9, wherein the influenced runtime objects are determined by navigation of an object model (1500) based on the invalidation rules (1530).

13. The method of claim 12, wherein the invalidation rules (1530) further specify an object navigation path based on the object model.

14. The method of claim 9, wherein the influenced runtime objects are invalidated by marking (1950) a state associated with each influenced runtime object as invalid.

15. The method of claim 9, further comprising locking (2040) runtime objects influenced by the changed development object.

16. The method of claim 15, further comprising determining whether an influenced runtime object can be locked, and when an influenced runtime object cannot be locked, queuing (2440) a request to invalidate said influenced runtime object.

## Patentansprüche

1. Computersystem zum selektiven Generieren von Laufzeitobjekten in einer Anwendungsentwicklungsumgebung, umfassend:
einen Metamodellierer (435), der konfiguriert ist, um eine Spezifikation von Entwicklungsobjekttypen zu empfangen, die von einem Anwendungsrahmen (400) definiert wurden;
einen Modellierer (445), der konfiguriert ist, um eine Spezifikation von Entwicklungsobjekten (1715) von einem Anwendungsentwickler zu empfangen, wobei jedes Entwicklungsobjekt zu einem jeweiligen Entwicklungsobjekttyp gehört;
eine Außerkraftsetzungs-Managerkomponente (1735), die konfiguriert ist, um eine Anzeige zu empfangen, dass eines der Entwicklungsobjekte (1715) eines assoziierten Entwicklungsobjekttyps (MDO) sich geändert hat, zu bestimmen (1930), welche Laufzeitobjekte aus einem Satz von Laufzeitobjekten (1720) durch das geänderte Entwicklungsobjekt beeinflusst werden, wobei jedes Laufzeitobjekt einen jeweiligen Laufzeitobjekttyp (RTO1; RTO2) aufweist, und die beeinflussten Laufzeitobjekte außer Kraft zu setzen (1950), wobei die Bestimmung von Laufzeitobjekten auf Außerkraftsetzungsregeln (1530) basiert, die Laufzeitobjekttypen (RTO1; RT02) spezifizieren, die durch Änderungen in Entwicklungsobjekten (1715) von bestimmten Entwicklungsobjekttypen (MDO) beeinflusst werden; und
eine Generierungskomponente (455), die konfiguriert ist, um eine Anforderung eines Laufzeitobjekts aus dem Satz von Laufzeitobjekten (1720) zu empfangen und das angeforderte Laufzeitobjekt aus seinen korrespondierenden Entwicklungsobjekten erneut zu generieren, wenn das angeforderte Laufzeitobjekt außer Kraft gesetzt wurde.

2. System nach Anspruch 1, wobei die Anzeige empfangen wird, wenn Änderungen an dem Entwicklungsobjekt in einer Änderungsliste im zentralen Speicher (1700) fortbestehen.

3. System nach Anspruch 2, wobei die Anzeige empfangen wird, wenn das Entwicklungsobjekt zur Basislinie freigegeben wird.

4. System nach Anspruch 2, wobei die beeinflussten Laufzeitobjekte durch Navigation eines Objektmodells (1500) basierend auf den Außerkraftsetzungsregeln (1530) bestimmt werden.

5. System nach Anspruch 4, wobei die Außerkraftsetzungsregeln (1530) weiterhin einen Objektnavigationspfad basierend auf dem Objektmodell (1500) spezifizieren.

6. System nach Anspruch 2, wobei die beeinflussten Laufzeitobjekte durch Kennzeichnen (1950) eines Zustands, der mit jedem beeinflussten Laufzeitobjekt assoziiert ist, als ungültig außer Kraft gesetzt werden.

7. System nach Anspruch 1, wobei das System konfiguriert ist, um Laufzeitobjekte, die durch das geänderte Entwicklungsobjekt beeinflusst werden, zu sperren (2040).

8. System nach Anspruch 7, wobei das System konfiguriert ist, um zu bestimmen, ob ein beeinflusstes Laufzeitobjekt gesperrt werden kann, und wenn ein beeinflusstes Laufzeitobjekt nicht gesperrt werden kann, konfiguriert ist, um eine Anforderung zur Außerkraftsetzung des beeinflussten Laufzeitobjekts in eine Warteschlange zu setzen (2440).

9. Computerimplementiertes Verfahren zum selektiven Generieren von Laufzeitobjekten in einer Anwendungsentwicklungsumgebung, umfassend:
Empfangen, durch einen Metamodellierer (435), von einer Spezifikation von Entwicklungsobjekttypen, die von einem Anwendungsrahmen (400) definiert wurden;
Empfangen von einem Anwendungsentwickler, durch einen Modellierer (445), von einer Spezifikation von Entwicklungsobjekten, wobei jedes Entwicklungsobjekt zu einem jeweiligen Entwicklungsobjekttyp gehört;
Empfangen einer Anzeige, dass eines der Entwicklungsobjekte eines assoziierten Entwicklungsobjekttyps (MDO) sich geändert hat;
Bestimmen, welche Laufzeitobjekte aus einem Satz von Laufzeitobjekten (1720) durch das geänderte Entwicklungsobjekt beeinflusst werden, wobei jedes Laufzeitobjekt einen jeweiligen Laufzeitobjekttyp (RTO1; RTO2) aufweist und die Bestimmung auf Außerkraftsetzungsregeln (1530) basiert, die Laufzeitobjekttypen (RTO1; RTO2) spezifizieren, die durch Änderungen in Entwicklungsobjekten (1715) von bestimmten Entwicklungsobjekttypen (MDO) beeinflusst werden;
Außerkraftsetzen (1950) der beeinflussten Laufzeitobjekte;
Empfangen einer Anforderung eines Laufzeitobjekts aus dem Satz von Laufzeitobjekten, und
erneutes Generieren des angeforderten Laufzeitobjekts aus seinen korrespondierenden Entwicklungsobjekten, wenn das angeforderte Laufzeitobjekt außer Kraft gesetzt wurde.

10. Verfahren nach Anspruch 9, wobei die Anzeige empfangen wird, wenn Änderungen an dem Entwicklungsobjekt in einer Änderungsliste im zentralen Speicher (1700) fortbestehen.

11. Verfahren nach Anspruch 9,wobei die Anzeige empfangen wird, wenn das Entwicklungsobjekt zur Basislinie freigegeben wird.

12. Verfahren nach Anspruch 9, wobei die beeinflussten Laufzeitobjekte durch Navigation eines Objektmodells (1500) basierend auf den Außerkraftsetzungsregeln (1530) bestimmt werden.

13. Verfahren nach Anspruch 12, wobei die Außerkraftsetzungsregeln (1530) weiterhin einen Objektnavigationspfad basierend auf dem Objektmodell spezifizieren.

14. Verfahren nach Anspruch 9, wobei die beeinflussten Laufzeitobjekte durch Kenuzeichnen (1950) eines Zustands, der mit jedem beeinflussten Laufzeitobjekt assoziiert ist, als ungültig außer Kraft gesetzt werden.

15. Verfahren nach Anspruch 9, weiter Sperren (2040) von Laufzeitobjekten umfassend, die durch das geänderte Entwicklungsobjekt beeinflusst werden.

16. Verfahren nach Anspruch 15, weiter umfassend, zu bestimmen, ob ein beeinflusstes Laufzeitobjekt gesperrt werden kann, und wenn ein beeinflusstes Laufzeitobjekt nicht gesperrt werden kann, eine Anforderung zur Außerkraftsetzung des beeinflussten Laufzeitobjekts in eine Warteschlange zu setzen (2440).

## Revendications

1. Système informatique destiné à générer de manière sélective des objets de durée d'exécution dans un environnement de développement d'applications, comportant :
un méta-modeleur (435) configuré de manière à recevoir une spécification de types d'objets de développement définie par une infrastructure d'application (400);
un modeleur (445) configuré de manière à recevoir, d'un développeur d'application, une spécification d'objets de développement (1715), chaque objet de développement étant d'un type d'objet de développement respectif ;
un élément de gestionnaire d'invalidation (1735) configuré de manière à recevoir une indication mentionnant que l'un desdits objets de développement (1715) d'un type d'objet de développement associé (MDO) a été modifié, à déterminer (1930) quels objets de durée d'exécution appartenant à un ensemble d'objets de durée d'exécution (1720) sont influencés par l'objet de développement modifié, chaque objet de durée d'exécution présentant un type d'objet de durée d'exécution respectif (RTO1; RTO2), et à invalider (1950) les objets de durée d'exécution influencés, dans lequel la détermination d'objets de durée d'exécution est basée sur des règles d'invalidation (1530) spécifiant des types d'objets de durée d'exécution (RTO1; RTO2) influencés par des modifications dans des objets de développement (1715) de types d'objets de développement particuliers (MDO) ; et
un élément de générateur (455) configuré de manière à recevoir une demande concernant un objet de durée d'exécution provenant de l'ensemble d'objets de durée d'exécution (1720) et à régénérer l'objet de durée d'exécution demandé à partir des ses objets de développement correspondants, lorsque l'objet de durée d'exécution demandé a été invalidé.

2. Système selon la revendication 1, dans lequel l'indication est reçue lorsque des modifications apportées à l'objet de développement dans une liste de modifications continuent d'exister au niveau du stockage central (1700).

3. Système selon la revendication 2, dans lequel l'indication est reçue lorsque l'objet de développement est envoyé vers la base de référence.

4. Système selon la revendication 2, dans lequel les objets de durée d'exécution influencés sont déterminés par une navigation d'un modèle d'objets (1500) basée sur les règles d'invalidation (1530).

5. Système selon la revendication 4, dans lequel les règles d'invalidation (1530) spécifient en outre un chemin de navigation d'objets basé sur le modèle d'objets (1500).

6. Système selon la revendication 2, dans lequel les objets de durée d'exécution influencés sont invalidés en étiquetant (1950) un état connexe à chaque objet de durée d'exécution influencé en tant que non valide.

7. Système selon la revendication 1, dans lequel le système est configuré de manière à verrouiller (2040) des objets de durée d'exécution influencés par l'objet de développement modifié.

8. Système selon la revendication 7, dans lequel le système est configuré de manière à déterminer si un objet de durée d'exécution influencé peut être verrouillé, et lorsqu'un objet de durée d'exécution influencé ne peut pas être verrouillé, le système est configuré de manière à placer en file d'attente (2440) une demande en vue d'invalider ledit objet de durée d'exécution influencé.

9. Procédé mis en oeuvre dans un ordinateur destiné à générer de manière sélective des objets de durée d'exécution dans un environnement de développement d'applications, comportant les étapes ci-dessous consistant à :
recevoir, par le biais d'un méta-modeleur (435), une spécification de types d'objets de développement définie par une infrastructure d'application (400) ;
recevoir, par le biais d'un modeleur (445), d'un développeur d'application, une spécification d'objets de développement, chaque objet de développement étant d'un type d'objet de développement respectif;
recevoir une indication mentionnant que l'un desdits objets de développement d'un type d'objet de développement (MDO) associé a été modifié ;
déterminer quels objets de durée d'exécution appartenant à un ensemble d'objets de durée d'exécution (1720) sont influencés par l'objet de développement modifié, chacun des objets de durée d'exécution présentant un type d'objet de durée d'exécution respectif (RTO1 ; RTO2), et l'étape de détermination étant basée sur des règles d'invalidation (1530) spécifiant des types d'objets de durée d'exécution (RTO1 ; RTO2) influencés par des modifications dans des objets de développement (1715) des types d'objets de développement particuliers (MDO) ;
invalider (1950) les objets de durée d'exécution influencés ;
recevoir une demande concernant un objet de durée d'exécution provenant de l'ensemble d'objets de durée d'exécution ; et
régénérer l'objet de durée d'exécution demandé à partir des ses objets de développement correspondants lorsque l'objet de durée d'exécution demandé a été invalidé.

10. Procédé selon la revendication 9, dans lequel l'indication est reçue lorsque des modifications apportées à l'objet de développement dans une liste de modifications continuent d'exister au niveau du stockage central (1700).

11. Procédé selon la revendication 9, dans lequel l'indication est reçue lorsque l'objet de développement est envoyé vers la base de référencé.

12. Procédé selon la revendication 9, dans lequel les objets de durée d'exécution influencés sont déterminés par une navigation d'un modèle d'objets (1500) basée sur les règles d'invalidation (1530).

13. Procédé selon la revendication 12, dans lequel les règles d'invalidation (1530) spécifient en outre un chemin de navigation d'objets basé sur le modèle d'objets.

14. Procédé selon la revendication 9, dans lequel les objets de durée d'exécution influencés sont invalidés en étiquetant (1950) un état connexe à chaque objet de durée d'exécution influencé en tant que non valide.

15. Procédé selon la revendication 9, comportant en outre l'étape consistant à verrouiller (2040) des objets de durée d'exécution influencés par l'objet de développement modifié.

16. Procédé selon la revendication 15, comportant en outre l'étape consistant à déterminer si un objet de durée d'exécution influencé peut être verrouillé, et lorsqu'un objet de durée d'exécution influencé ne peut pas être verrouillé, à placer en file d'attente (2440) une demande en vue d'invalider ledit objet de durée d'exécution influencé.
